(19) Europäisches Patentamt / European Patent Office / Office européen des brevets

(11) **EP 1 331 751 B1**

(12) **EUROPEAN PATENT SPECIFICATION**

(45) Date of publication and mention
of the grant of the patent:
**02.05.2007 Bulletin 2007/18**

(51) Int Cl.:
***H04L 9/08*** (2006.01)

(21) Application number: **03002014.3**

(22) Date of filing: **28.01.2003**

(54) **Key generating method, contents providing method, ciphered-contents deciphering method, pirate identifying method, contents providing system, user system, trace system, ciphering apparatus, diciphering apparatus, and computer program**

Verfahren zur Erzeugung eines Schlüssels, Inhaltsbereitstellungsverfahren, Entschlüsselungsverfahren für verschlüsselte Inhalte, Verfahren zur Erkennung von illegalen Benutzern, System zum Bereitstellen von Inhalten, Benutzersystem, Verfahren zur Ablaufverfolgung, Verschlüsselungsgerät, Entschlüsselungsgerät, und Computerprogramm

Procédé de génération de clé, procédé de fourniture de contenus, procédé de déchiffrement de contenus chiffrés, procédé d'identification de pirate , système fournisseur de contenus, système d'utilisateur, procédé de tracage, dispositif de chiffrement, dispositif de déchiffrement, et programme informatique

(84) Designated Contracting States:
**DE FR GB**

(30) Priority: **28.01.2002 JP 2002019134**
**29.11.2002 JP 2002348854**

(43) Date of publication of application:
**30.07.2003 Bulletin 2003/31**

(73) Proprietor: **KABUSHIKI KAISHA TOSHIBA**
**Tokyo (JP)**

(72) Inventor: **Matsushita, Tatsuyuki**
**Minato-ku,**
**Tokyo 105-8001 (JP)**

(74) Representative: **HOFFMANN EITLE**
**Patent- und Rechtsanwälte**
**Arabellastrasse 4**
**81925 München (DE)**

(56) References cited:
- **YOSHIDA M ET AL: "A SUBSCRIBER-EXCLUDING AND TRAITOR-TRACING BROADCAST DISTRIBUTION SYSTEM" , IEICE TRANSACTIONS ON FUNDAMENTALS OF ELECTRONICS, COMMUNICATIONS AND COMPUTER SCIENCES, INSTITUTE OF ELECTRONICS INFORMATION AND COMM. ENG. TOKYO, JP, VOL. E84-A, NR. 1, PAGE(S) 247-255 XP001006546 ISSN: 0916-8508 * page 249 - page 254 ***
- **LAIH C-S ET AL: "On the design of conference key distribution systems for the broadcasting networks" , NETWORKING: FOUNDATION FOR THE FUTURE. SAN FRANCISCO, MAR. 28 - APR. 1, 1993, PROCEEDINGS OF THE ANNUAL JOINT CONFERENCE OF THE COMPUTER AND COMMUNICATIONS SOCIETIES (INFOCOM), LOS ALAMITOS, IEEE COMP. SOC. PRESS, US, VOL. VOL. 2 CONF. 12, PAGE(S) 14 , TAIWAN XP010032386 ISBN: 0-8186-3580-0 * page 1411 - page 1412 ***
- **PIEPRZYK J ET AL: "Multiparty key agreement protocols" , IEE PROCEEDINGS E. COMPUTERS & DIGITAL TECHNIQUES, INSTITUTION OF ELECTRICAL ENGINEERS. STEVENAGE, GB, VOL. 147, NR. 4, PAGE(S) 229-236 , AUSTRALIA XP006013915 ISSN: 1350-2387 * page 232 - page 234 ***

- **KAORU KUROSAWA ET AL: "OPTIMUM TRAITOR TRACING AND ASYMMETRIC SCHEMES" , ADVANCES IN CRYPTOLOGY-EUROCRYPT. INTERNATIONAL CONFERENCE ON THE THEORY AND APPLICATION OF CRYPTOGRAPHIC TECHNIQUES, SPRINGER VERLAG, DE, PAGE(S) 145-157 XP000826868 * page 152 - page 156 ***

**Description**

The present invention is applicable to a contents providing system and user system for ciphering contents and providing the ciphered-contents to users, a ciphering apparatus and deciphering apparatus for use in the systems, a trace system for identifying pirates, a key generating method, a contents providing method, a ciphered-contents deciphering method, and a computer program.

Various pirate identifying methods have been proposed in broadcast contents distribution, and they are roughly classified in two types according to their constructions: The construction of one type of method is combinatorial while that of the other is algebraic and number-theoretic. The former type of method is inefficient in the following criteria: each subscriber's storage and the transmission overhead. This is because it has to greatly degrade the efficiency in order to eliminate the probability that an honest user is falsely detected as a pirate. On the other hand, an algebraic and number-theoretic approach solves the above efficiency problem. Relating to the latter method, pirate identifying with revocation of decipher keys of users are proposed by applying a technique of secret sharing to key distribution method. For example, refer to a proposal by M. Naor and B. Pinkas: "Efficient Trace and Revoke Schemes," in Proc. of Financial Cryptography '00, LNCS 1962, Springer-Verlag. pp. 1-20, February 2000, or to XP001006546 (Yoshida *et al.*).

However, the latter method requires an exponential number of processing steps for performing a black-box tracing, and it is practically impossible to perform the black-box tracing. In the black-box tracing, when one or more pirates are identified from a pirated version of deciphering device only by observing its inputs and outputs without searching internal information (decipher key, etc.) by prying it open. More specifically, a tracer (one who perform the black-box tracing) assumes suspects (candidates of pirates) and determines whether or not the suspects are pirates, and this process must be done in all sets of suspects. In the previous methods, there is an upper limit in the number of suspects that can be tested at once, since the key generation polynomial is single.

$$f(x) = a_0 + a_1 \cdot x + a_2 \cdot x^2 + \ldots + a_k \cdot x^k$$

Assuming that the total number of users is n and the maximum number of pirates in a coalition is k, nCk = n!/{k!(n-k)!} sets of suspects must be investigated, and it is not realistic.

Note that if k is set to, for example, n-1, then only n sets of suspects are needed to perform the black-box tracing. In this case, however, the transmission overhead has to be linear in the total number of users, hence inefficient. Therefore, a method in which k is set to n-1, for example, refer to a proposal by XP 010032386 (Laih *et al.*), cannot be straightforwardly applied to black-box tracing.

Thus, in the conventional method described above, there was a problem that a huge number of processing steps are required in the black-box tracing or the transmission overhead has to be inefficient. Further, it was not flexible in the sense that the number of revoked decipher keys is limited to a certain threshold which cannot be changed unless the system is initialized again.

The scheme disclosed in XP010032386 itself does not support black-box tracing but might be able to be applied to a black-box tracing scheme since in the scheme a technique of secret sharing is used as in the schemes of Naor-Pinkas, Yoshida *et al.* If the scheme is straightforwardly applied to black-box tracing , then the transmission overhead (header size) has to be linear in the total number of users, hence inefficient.

It is an object to provide a key generating method, a contents providing method, a ciphered-contents deciphering method, a pirate identifying method, a contents providing method, a user system, a tracing system, a ciphering device, and a deciphering device which are capable of realizing a high efficiency of transmission overhead, revoking decipher keys more flexibly, and enhancing the efficiency of black-box tracing.

According to a first aspect of the invention, there is provided a method of generating a decipher key in a system in which content ciphered with a session key and a header are provided to one or more users, the header enabling the session key to be obtained by using one or more decipher keys, and a user being enabled to obtain the session key by using the header and a decipher key assigned to the user, and to decipher the ciphered-content by using the session key, comprising: dividing group user identification information for a group of users into subgroups; assigning different key generation polynomials to the respective subgroups; and generating a decipher key by substituting the user identification information in the key generation polynomial assigned to the subgroup to which the user identification information of the user belongs.

According to a second aspect of the present invention, there is provided a computer program for generating a decipher key in a system in which content ciphered with a session key and a header are provided to one or more users, the header enabling the session key to be obtained by using one or more decipher keys, and a user being enabled to obtain the session key by using the header and a decipher key assigned to the user, and to decipher the ciphered-content by using the session key, operable to:

divide group user identification information for a group of users into subgroups;

assign different key generation polynomials to the respective subgroups; and

generate a decipher key by substituting the user identification information in the key generation polynomial assigned to the subgroup to which the user identification information of the user belongs.

According to a third aspect of the present invention, there is provided a decipher key generating apparatus for use in a system in which content ciphered with a session key and a header are provided to one or more users, the header enabling the session key to be obtained by using one or more decipher keys, and a user being enabled to obtain the session key by using the header and a decipher key assigned to the user, and to decipher the ciphered-content by using the session key, comprising:

dividing means arranged to divide group user identification information for a group of users into subgroups;

assigning means arranged to assign different key generation polynomials to the respective subgroups; and

decipher key generating means arranged to generate a decipher key by substituting the user identification information in the key generation polynomial assigned to the subgroup to which the user identification information of the user belongs.

This summary of the invention does not necessarily describe all necessary features so that the invention may also be a sub-combination of these described features.

For a better understanding of the present invention, and to show how the same may be carried into effect, reference will now be made, by way of example, to the accompanying drawings, in which:

FIG. 1 is a diagram showing an example of a configuration of a data transmission system according to an arrangement;

FIG. 2 is a diagram showing an example of an overall sequence of the data transmission system according to the arrangement;

FIG. 3 is a diagram showing an example of a configuration of a ciphering device to be used in a contents providing system according to the arrangement;

FIG. 4 is a diagram showing an example of a configuration of a deciphering device to be used in a user system according to the arrangement;

FIGS. 5A, 5B, 5C, and 5D are diagrams explaining grouping of user sets and users to be revoked;

FIG. 6 is a diagram showing an example of a configuration of a tracing device according to the arrangement;

FIG. 7 is a flowchart showing an example of a processing procedure of tracing algorithm (pirate identifying method) according to the arrangement;

FIG. 8 is a flowchart showing an example of a processing procedure in step S3 of the tracing algorithm;

FIG. 9 is a flowchart showing other example of a processing procedure of tracing algorithm (pirate identifying method) according to the arrangement; and

FIG. 10 is a flowchart showing an example of a processing procedure in step S3 of the tracing algorithm according to a second arrangement.

An arrangement will now be described with reference to the accompanying drawings.

First arrangement

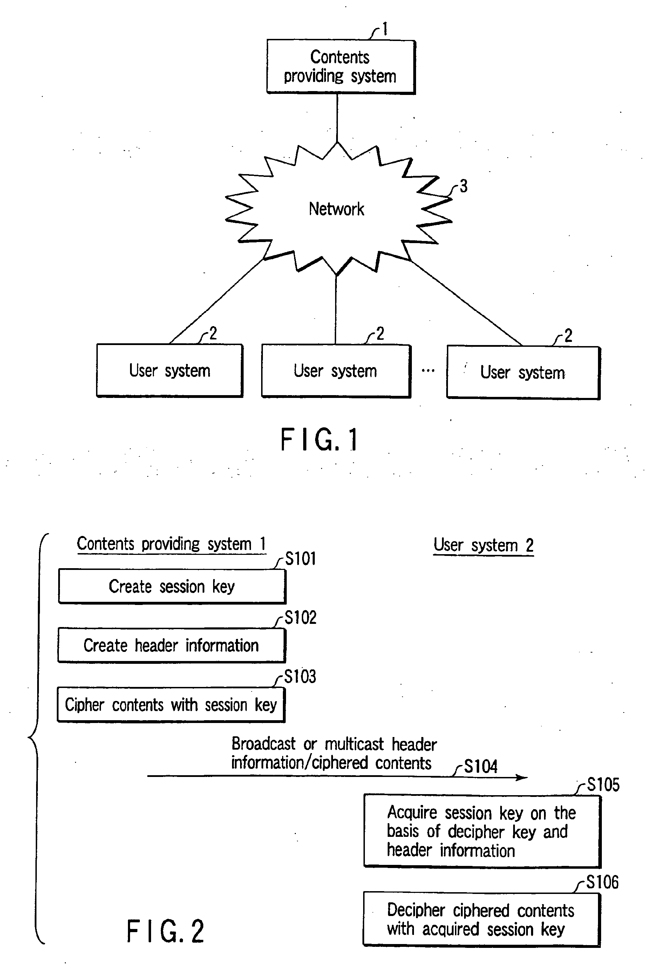

FIG. 1 shows an example of a configuration of a data transmission system according to an arrangement.

This data transmission system comprises a contents providing system 1 for ciphering contents and broadcasting or multicasting the ciphered-contents through a network 3, and user systems 2 for deciphering the ciphered-contents which are broadcast or multicast from the contents providing system 1 by receiving through the network 3.

In FIG. 1, only a single contents providing system 1 is shown, but plural contents systems may exist.

One node may have both a function of contents providing system and a function of user system. Further, all nodes may have both a function of contents providing system and a function of user system, and may communicate each other ciphered data.

The network 3 may be either wired network or wireless network. Both wired network and wireless network may be used. It may be also either two-way network or one-way network.

FIG. 2 shows an example of overall sequence of the arrangement.

It is assumed that each user system 2 is assigned with individual user identification information (user ID).

The contents providing system 1 generates a predetermined session key (single key) (S101), generates header information for acquiring (deciphering) the session key in each user system 2 (S102), ciphers the contents with the session key (S103), and broadcasts or multicasts by adding the header information to the ciphered-contents (S104).

Steps S102 and S103 may be done in reverse order or at the same time. When the session key is not changed in each case, step S101 may be omitted. In such a case, a prepared session key is used.

Each user system 2 having received (S104) the header information and ciphered-contents acquires (deciphers) the session key on the basis of the decipher key obtained according to the own assigned user ID and the header information (S105), and deciphers the ciphered-contents by using the acquired (deciphered) session key (S106).

As described specifically below, when finding a user ID subject to revocation of the decipher key, the contents providing system 1 generates header information on the basis of IDs of one or plural users subject to revocation, and thereby prohibits acquisition of a correct session key in S105 (thereby not allowing to decipher the ciphered-contents in S106) in the user system 2 having the user ID subject to revocation. In this case, the correct session key can be acquired in S106 (thereby the ciphered-contents can be deciphered in S106) in the user system 2 having a user ID other than the user ID subject to revocation.

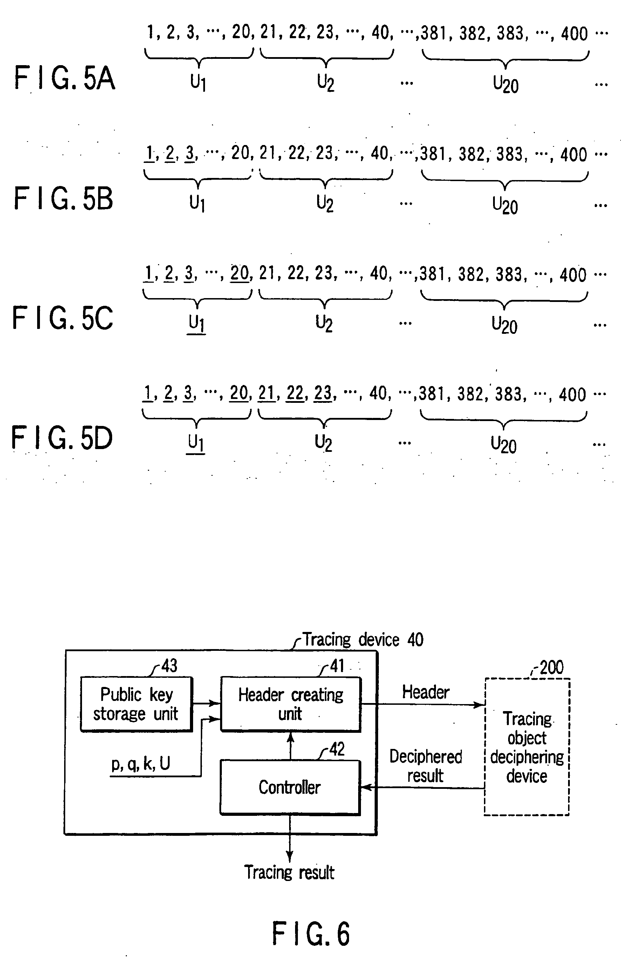

In this arrangement, the user's decipher key is generated by substituting the user ID (any one of positive integers selected from a specific range, such as consecutive numbers from 1 to n) in the key generation polynomial. In this case, as shown in FIG. 5A, the user set is divided into subgroups, and each subgroup is assigned with the key generation polynomial.

That is, subgroup $U_1$ is assigned with

$$f_1(x) = a_0 + b_1 \cdot x + a_2 \cdot x^2 + a_3 \cdot x^3 + \ldots + a_k \cdot x^k$$

subgroup $U_2$ is assigned with

$$f_2(x) = a_0 + a_1 \cdot x + b_2 \cdot x^2 + a_3 \cdot x^3 + \ldots + a_k \cdot x^k$$

subgroup $U_3$ is assigned with

$$f_3(x) = a_0 + a_1 \cdot x + a_2 \cdot x^2 + b_3 \cdot x^3 + \ldots + a_k \cdot x^k$$

subgroup $U_m$ is assigned with

$$f_m(x) = a_0 + a_1 \cdot x + a_2 \cdot x^2 + a_3 \cdot x^3 + \ldots + b_m \cdot x^m + \ldots + a_k \cdot x^k$$

and so forth. In this way, each subgroup is assigned with a different key generation polynomial (this is an example of a key generation polynomial differing in part of the polynomial coefficient), and the decipher key of the user ID is generated by using the key generation polynomial assigned to the subgroup to which the corresponding user ID belongs.

Using the above method for generating decipher keys, decipher keys of an arbitrary number of users can be revoked, and the number of processing steps required in the black-box tracing can be reduced.

The decipher key obtained by substituting the user ID assigned to the user system 2 in the key generation polynomial assigned to the subgroup to which the user ID belongs is supplied to the user system 2 in advance from the contents providing system 1 or a trusted third party, and held in a user information storage unit 23.

The grouping method shown in FIG. 5A is only an example, and various other grouping methods are possible.

In this example, the user ID is any one of positive integers selected from a given range (for example, consecutive numbers from 1 to n), but not limited to positive integers. The user ID may be composed of alphanumeric codes, and corresponding to an alphanumeric user ID, a positive integer selected from a given range may be assigned, and the decipher key may be calculated according to the positive integer individually assigned to the user ID and the corresponding key generation polynomial.

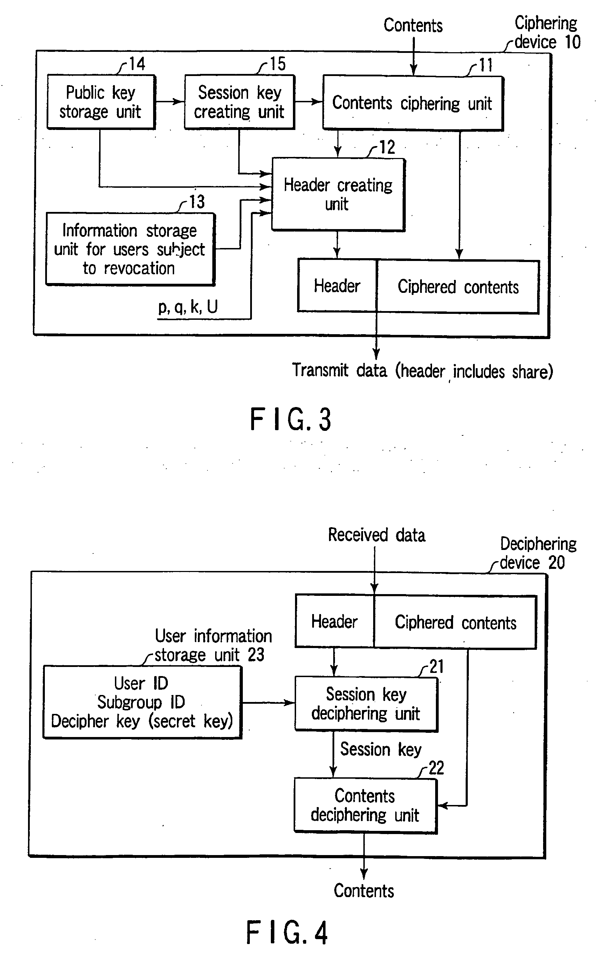

FIG. 3 shows an example of a configuration of a ciphering device 10 to be used in the contents providing system 1 of the arrangement.

The ciphering device 10 comprises a public key storage unit 14 for storing a public key, a session key generating unit 15 for generating a session key on the basis of the public key, a contents ciphering unit 11 for ciphering contents by using the session key, a revoke user information storage unit 13 for storing information on the user subject to revocation, and a header generating unit 12 for generating header information on the basis of the public key, session key (or its source information), revoked-user information (if there is a user subject to revocation), and other necessary parameters (parameters p, q, k, and U in the following example).

The contents providing system 1 also comprises other devices as required such as a communication interface, a device for storing contents, and a device for inputting contents.

FIG. 4 shows an example of a configuration of a deciphering device 20 to be used in the user system 2 of the arrangement.

The deciphering device 20 comprises a user information storage unit 23 for storing the own subgroup ID, own assigned user ID, and decipher key corresponding to the user ID (decipher key or secret key obtained on the basis of the user ID and the key generation polynomial assigned to the subgroup to which the user ID belongs), a session key deciphering unit 21 for acquiring (deciphering) the session key on the basis of the decipher key and header information, and a contents deciphering unit 22 for deciphering the ciphered-contents with the acquired (deciphered) session key.

The user system 2 also comprises other devices as required such as a communication interface, a device for storing contents, and a device for displaying contents.

An outline of the mechanism for deciphering the session key from the header information will be briefly explained below.

First, as shown in FIG. 5B (underline shows the user subject to revocation), when revoked-user IDs = 1, 2, 3 only, it is designed to decipher the session key only when four pieces of data (shares mentioned below) are prepared. For the simplicity of explanation, the number of users subject to revocation is supposed to be equal to the maximum number of pirates in a coalition, and the session key can be deciphered only when the number of prepared shares is that of revoked users plus one.

The header information includes the share $(1, g^{rF(1)})$ about user ID = 1, the share $(2, g^{rF(2)})$ about user ID = 2, the share $(3, g^{rF(3)})$ about user ID = 3, and also the information (described later) as the source of determining the share $(x_0, g^{rF(x0)})$ about the pertinent user ID = $x_0$.

As for other user ID than user IDs = 1, 2, 3, since the necessary four shares are prepared by determining the share $(x_0, g^{rF(x0)})$ about the pertinent user ID = $x_0$, a correct session key can be acquired.

By contrast, as for user ID = 1, even if the share $(1, g^{rF(1)})$ corresponding to the user ID = 1 is determined, it is duplicate with the share described in the header information, all necessary four pieces of data are not prepared, and correct session key cannot be acquired. It is the same in user IDs = 2, 3.

Next, as shown in FIG. 5C, when all revoke user IDs = 1 to 20 belong to the same subgroup $U_1$, none of the shares of users subject to revocation is used, but one subgroup $U_1$ is entirely revoked. To revoke one entire subgroup $U_1$, a wrong value (random number, etc.) is described in the information used only by the subgroup $U_1$ as the source of calculation of the session key such that the correct session key may not be obtained by this subgroup $U_1$.

As for the user ID belonging to the subgroup $U_1$, since the information as the source of calculation of the session key is a wrong value, the correct session key cannot be obtained.

Further, as shown in FIG. 5D, when revoking the user IDs = 1 to 20, that is, one entire subgroup $U_1$, and also revoking user IDs = 21, 22, 23, the method shown in FIG. 5B and the method shown in FIG. 5C are combined to be executed. To explain simply, when the number of users subject to revocation not belonging to the subgroup to be revoked completely is equal to the maximum number of pirates in a coalition, the number of shares necessary for deciphering the session key is the number of users subject to revocation not belonging to the subgroup to be revoked completely plus one.

In this case, there are described, in the header information, the share $(21, g^{rF(21)})$ about user ID = 21, the share $(22, g^{rF(22)})$ about user ID = 22, and the share $(23, g^{rF(23)})$ about user ID = 23. Further, in order that a correct share may not be obtained by users of the subgroup $U_1$, a wrong value (random number, etc.) is described in the information used only by the subgroup $U_1$ as the source of calculation of the share. In other subgroups, a correct value is described in the information used by the pertinent subgroup as the source of calculation of the share so as to obtain correct shares.

In user IDs other than user IDs belonging to the subgroup $U_1$ and user IDs other than user IDs = 21, 22, 23, a correct share can be obtained. Thereby, four necessary pieces of data are prepared, so that a correct session key can be acquired.

As for user IDs = 21, 22, 23, even if the correct share can be obtained, four necessary pieces of data are not prepared, and the correct session key cannot be acquired.

In user IDs belonging to the subgroup $U_1$, since the information as the source of calculation of the correct share is a wrong value, four correct shares are not prepared, and hence the correct session key cannot be acquired.

The following is a detailed description about key generating phase, ciphering phase, and deciphering phase.

First, parameters are defined.

It is assumed that the total number of users is n and the maximum number of pirates in a coalition is k.

Assuming p and q are prime numbers, q divides p-1 without remainder, and q is n+1 or more.

Assume $Zq = \{0, 1, ..., q-1\}$.

Assume $Zp^* = \{1, ..., p-1\}$.

Assume g is q-th root of unity over Zp*.

Assume Gq is a subgroup of Zp*, and is a

multiplicative group of order q.

Assume a user set (a set of user identification information (user numbers)) is U ($U \subseteq Zq - \{0\}$). Herein, Zq - {0} means the result of removing {0} from Zq.

Assume a set of users subject to revocation (a set of users whose decipher keys are revoked) to be $\chi$.

Values of p, q, and g are public.

Unless otherwise specified, hereinafter, calculation is done over Zp*.

(Key generating phase)

As the source of a public key, parameters $a_0$, ..., $a_k$, $b_1$, ..., $b_k$, $c_0$ are selected at random in Zq. The session key is $(g^{c_0})^r$.

Herein, other configuration not selecting $c_0$ is also possible, and in such a case, $c_0$ is generated in the ciphering phase described below.

Next, a public key e is calculated.

When $c_0$ is selected above, the public key e is as shown in formula (1).

$$e = (g, y_{0,0}, \cdots, y_{0,k}, y_{1,1}, \cdots, y_{1,k}, y_{2,0})$$
$$= (g, g^{a_0}, \cdots, g^{a_k}, g^{b_1}, \cdots, g^{b_k}, g^{c_0}) \qquad \cdots (1)$$

When $c_0$ is not selected, the public key e is as shown in formula (2).

$$e = (g, y_{0,0}, \cdots, y_{0,k}, y_{1,1}, \cdots, y_{1,k})$$
$$= (g, g^{a_0}, \cdots, g^{a_k}, g^{b_1}, \cdots, g^{b_k}) \qquad \cdots (2)$$

Further, the user set U is divided into k disjoint subsets (k is the maximum number of pirates in a coalition). Assume these k subsets to be $U_1$, ..., $U_k$. These $U_1$,..., $U_k$ are public.

Finally, user u belonging to a subset $U_i$ (user ID of a user u is u) is provided with a decipher key $f_i(u)$ (the value obtained by substituting x = u in the key generation polynomial $f_i(x)$ assigned to the subset $U_i$ to which the user u belongs). Herein, the key generation polynomial $f_i(x)$ is expressed as shown in formula (3).

$$f_i(x) = \sum_{j=0}^{k} a_{i,j} x^j \bmod q \qquad \cdots (3)$$

$$a_{i,j} = \begin{cases} a_j & (i \neq j) \\ b_j & (i = j) \end{cases} \qquad \cdots (3-1)$$

(Ciphering phase)

In the case where the set taking away all subsets $U_z$ (for example, $U_1$ in FIG. 5D) which satisfy $U_z \subseteq \chi$ from the set $\chi$ of users subject to revocation (for example, {1, 2, ..., 23} in FIG. 5D) is not an empty set, it is supposed to be {$x_1$, ..., $x_m$}. For example, in the case of FIG. 5D, it is {$x_1$, ..., $x_3$} = {21, 22, 23} (m = 3).

Next, $c_1$, ..., $c_m$ (or $c_0$, ..., $c_m$ in the case $c_0$ is not generated in the key generating phase) is selected in Zq at random, and header $h(r, \chi)$ is calculated according to formulas (4) to (4-8).

$$h(r, \chi) = \{h, h_{0,0}, \cdots, h_{0,\max(m,k)}, h_{1,1}, \cdots, h_{1,k}, H_1, \cdots, H_m\} \cdots (4)$$

$$h = g^r \qquad\qquad \cdots (4-1)$$

$$h_{0,0} = (y_{0,0}y_{2,0})^r \qquad\qquad \cdots (4-2)$$

$$h_{0,j} = \begin{cases} (y_{0,j}g^{c_j})^r & (1 \le j \le \min(m, k)) \\ z_{0,j} & (\min(m, k) + 1 \le j \le \max(m, k)) \end{cases} \quad \cdots (4-3)$$

$$z_{0,j} = \begin{cases} y^r_{0,j} & (m < k) \\ g^{c_j r} & (m > k) \end{cases} \qquad\qquad \cdots (4-4)$$

$$h_{1,j} = \begin{cases} g^{r_j} & (U_j \subseteq X) \\ z_{1,j} & (U_j \not\subseteq X) \end{cases} \qquad\qquad \cdots (4-5)$$

$$z_{1,j} = \begin{cases} (y_{1,j}g^{c_j})^r & (1 \le j \le \min(m, k)) \\ y^r_{1,j} & (\min(m, k) + 1 \le j \le k) \end{cases} \quad \cdots (4-6)$$

$$H_j = \left( x_j, g^{r\,F(x_j)} \right) \qquad\qquad \cdots (4-7)$$

$$F(x) = \sum_{j=0}^{m} c_j x^j \bmod q \qquad\qquad \cdots (4-8)$$

where r and rj are random numbers.

Elements in formula (4) are the information as the source of determining the share. For the user belonging to the subgroup i, this information includes the following.

$h, h_{0,0}, \cdots, h_{0,i-1}, h_{1,i}, h_{0,i+1}, \ldots, h_{0,\max(m,k)}$

In the case where $c_0$ is not generated in the key generating phase, $y_{2,0} = g^{c_0}$ is obtained.

For example, as in the case of FIG. 5D, $H_1 = (21, g^{rF(21)})$, $H_2 = (22, g^{rF(22)})$, $H_3 = (23, g^{rF(23)})$, and the like.

On the other hand, when the set taking away all subsets $U_z$ which satisfy $U_z \subseteq \chi$ from the set $\chi$ of users subject to revocation is an empty set (for example, in the case of FIG. 5C), or the set $\chi$ of users subject to revocation is an empty set (for example, in the case of FIG. 5A), (selecting $c_0$ in Zq at random when $c_0$ is not generated in the key generating phase), header $h(r, \chi)$ is calculated according to formula (5).

$$h(r, \chi) = \{h, h_{0,0}, \cdots, h_{0,k}, h_{1,1}, \cdots, h_{1,k}\} \quad \cdots (5)$$

$$h = g^r \qquad \cdots (5-1)$$

$$h_{0,0} = (y_{0,0} y_{2,0})^r \qquad \cdots (5-2)$$

$$h_{0,j} = h_{0,j}^r \qquad \cdots (5-3)$$

$$h_{1,j} = \begin{cases} g^{r_j} & (U_j \subseteq \chi) \\ y_{1,j}^r & (U_j \nsubseteq \chi) \end{cases} \qquad \cdots (5-4)$$

where $1 \le j \le k$, and r and rj are random numbers.

When $c_0$ is not generated in the key generating phase, $y2, 0 = g^{C_0}$.

The header shown in the formula (5) may be regarded as being composed of m = 0, by taking away $H_1$, ..., $H_m$ from the header shown in the formula (4).

Here, r is a random number generated by the contents distributor, and the header can be calculated by using the public key e, so that any one may be a contents distributor.

The session key is $g^{rc_0}$ (= $y_{2,0}^r$) = $g^{rF(0)}$, and the header $h(r, \chi)$ and the contents ciphered with session key are transmitted to the user.

(Deciphering phase)

Assume the user $x_0$ belongs to the subset $U_i$. When receiving the header of formula (4), if the user $x_0$ is not an element of the set $\chi$ of users subject to revocation, that is, the user $x_0$ is not subject to revocation, a share $g^{rF(x0)}$ for calculating the session key is calculated as shown in formula (6).

$$g^{rF(x_0)} = D_i(x_0) / h^{f_i(x_0)} \qquad \cdots (6)$$

$$D_i(x_0) = \prod_{j=0}^{\max(m,k)} B_{i,j}^{x_0^j} \qquad \cdots (6-1)$$

$$B_{i,j} = \begin{cases} h_{0,j} & (i \ne j) \\ h_{1,j} & (i = j) \end{cases} \qquad \cdots (6-2)$$

Using this share $g^{rF(x0)}$, a session key $g^{rF(0)}$ is calculated as shown in formula (7).

$$g^{rF(0)} = \prod_{j=0}^{m} \left( g^{rF(x_j)} \right)^{L_j} \qquad \cdots (7)$$

$$L_j = \prod_{0 \le l \le m, l \ne j} \frac{x_l}{x_l - x_j} \bmod q \quad \cdots (7-1)$$

On the other hand, when the received header is the format of formula (5), supposing m = 0, the session key $g^{rF(0)}$ is calculated as shown in formula (8).

$$g^{rF(0)} = D_i(x_0) \Big/ h^{f_i(x_0)} \quad \cdots (8)$$

$$D_i(x_0) = \prod_{j=0}^{k} B_{i,j}^{x_0^j} \quad \cdots (8-1)$$

$$B_{i,j} = \begin{cases} h_{0,j} & (i \ne j) \\ h_{1,j} & (i = j) \end{cases} \quad \cdots (8-2)$$

The definition of $D_i(x_0)$, $B_{i,j}$ is the same as in formula (6) supposing m = 0.

In this processing, to the set $\{x_1, ..., x_m\}$, $x_{m+1}, ..., x_t$ properly selected in Zq - (U+{0}) can be added arbitrarily (in this case, $\{x_1, ..., x_m, X_{m+1}, ..., x_t\}$ may be regarded as $\{x_1, ..., x_m\}$, that is, m = t in the above formulas, and the same calculation is applied). Herein, Zq - (U+{0}) is the result of removing the union of U and {0} from Zq.

A tracing device of the arrangement will be explained below.

The tracing device is designed to identify a user ID of a pirate from a pirate deciphering unit, in the case where the pirate deciphering unit is confiscated, by the black-box tracing (pirate identifying method of identifying the user ID of the pirate only by observing inputs and outputs of the pirate deciphering unit).

A pirate deciphering unit may be produced from a single deciphering device only or from plural deciphering devices. In the latter case, the users who give away their decipher keys to the pirate deciphering device are called colluders (or pirates in a coalition).

The pirate deciphering units produced from a single deciphering device can be operated by the same decipher key as in the original deciphering device. The pirate deciphering units produced from deciphering devices can be operated by any one of the same decipher keys as in the original deciphering devices. In the latter case, unless all decipher keys of the colluders are revoked, the session key can be obtained.

FIG. 6 shows an example of a configuration of the tracing device of the arrangement.

In this arrangement, by making use of the key distribution method explained above, the limit of the number of suspects that can be tested at once is eliminated.

A tracing device 40 comprises a controller 42 controlling a overall system, a public key storage unit 43 for storing a public key, and a header generating unit 41 for generating header information on the basis of the public key and other necessary parameters (parameters p, q, k, U in the example explained below) according to the instruction from the controller 42.

This tracing device 40 may be either incorporated in the content providing system 1, or independent from the contents providing system 1. Further, it may or may not have a function of connecting to the network 3.

In short, the controller 42 instructs one or plural user IDs to be revoked, that is, the set of users subject to revocation to the header generating unit 41, and the header generating unit 41 generates header information according to the instructed set of users subject to revocation. In this case, the session key (or its source information) may be either generated by the controller 42 and instructed to the header generating unit 41, or generated by the header generating unit 41 and noticed to the controller 42. The generated header information is supplied to a tracing object deciphering device (pirate deciphering unit) 200. The controller 42 receives the session key deciphered by the tracing object deciphering device 200, and determines whether or not the correct session key is obtained. The controller 42 repeats the same process while changing the set of users subject to revocation, determines the results comprehensively, and identifies the user ID of pirates.

Herein, it is determined whether or not the correct session key is obtained in the tracing object deciphering device 200. However, by inputting the contents ciphered by the session key also in the tracing object deciphering device 200, the ciphered-contents may be deciphered by the obtained session key in the tracing object deciphering device 200, and the result may be added to the controller 42, so that the controller 42 can determine whether or not the ciphered-contents are correctly deciphered in the tracing object deciphering device 200.

Several procedure examples of a procedure of tracing algorithm of the arrangement are shown below. The specific procedure of tracing algorithm is varied, and is not limited to the illustrated examples.

(Procedure example 1)

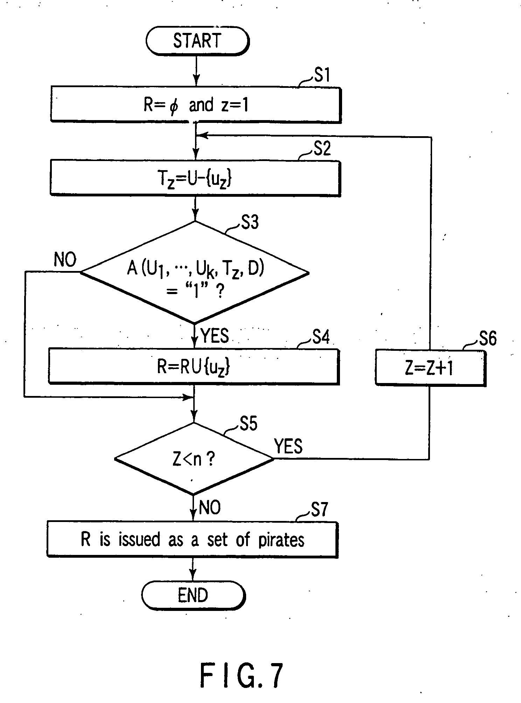

FIG. 7 shows an example of a processing procedure of tracing algorithm according to the arrangement.

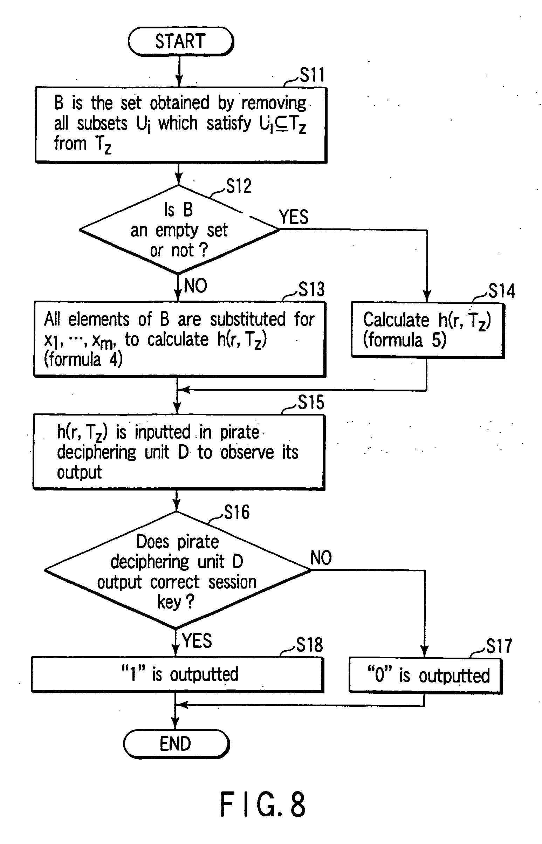

FIG. 8 shows an example of a processing procedure of algorithm of step 3 in FIG. 7.

When a pirate deciphering unit D is confiscated, the pirates whose decipher keys are contained in it are identified in the following procedure.

Elements of subsets $U_1$, ..., $U_k$ are labeled as in formula (9).

$$U_1 = \{u_1, \cdots, u_{d_1}\}$$
$$U_2 = \{u_{d_1+1}, \cdots, u_{d_1+d_2}\}$$
$$\vdots$$
$$U_k = \left\{u_{\Sigma_{j=1}^{k-1}d_j+1}, \cdots, u_{\Sigma_{j=1}^{k}d_j}\right\}$$
$$\text{where } \Sigma_{j=1}^{k}d_j = n \qquad \cdots (9)$$

Setting at R = ø (empty set) and z = 1 (S1), z = 1, ..., n are processed as follows (S5, S6).

Assume $T_z$ = U - {$u_z$} (S2). Herein, U - {$u_z$} means {$u_z$} is taken away from U.

Supposing the input to be $U_1$, ..., $U_k$, $T_z$, D, algorithm "A" is executed (S3).

When the output of algorithm "A" ($U_1$, ..., $U_k$, $T_z$, D) is 1, $u_z$ is added to the element of R (S4). If the output is 0, nothing is done.

In step S5, if z < n, z is incremented by 1 (S6), and the process returns to step S2.

If z = n in step S5, going out of the processing loop, R is determined as a pirate set (a set of user IDs of pirates), and R is outputted (S7).

The detail of algorithm "A" is shown in FIG. 8.

The set taking away all subsets $U_i$ which satisfy $U_i \subseteq T_z$ from $T_z$ is supposed to be B (S11).

Whether or not B is an empty set is checked (S12).

When B is not an empty set, all elements of B are substituted for $x_1$, ..., $x_m$, and h(r, $T_z$) is calculated as in formula (4) (S13). On the other hand, when B is an empty set, h(r, $T_z$) is calculated as in formula (5) (S14).

Concerning the pirate deciphering unit D, h(r, $T_z$) calculated in step S13 or step S14 is inputted, its output is observed (S15).

It is determined herein whether or not the pirate deciphering device D has outputted a correct session key (S16).

When the pirate deciphering unit D outputs a correct session key, "1" is outputted (S18). Otherwise, "0" is outputted (S17).

In the case where the pirate deciphering unit D outputs only the contents after deciphering, it is observed whether or not the contents are deciphered correctly. When the contents are deciphered correctly, "1" is issued, and "0" is outputted otherwise.

In this tracing method, one suspect (a candidate of pirates) is selected in each black-box test, that is, the header information generated on the assumption that all user IDs other than the selected user ID are subject to revocation is supplied to the tracing object deciphering device, and it is tested whether or not the suspect is a pirate. By repeating this inspection n times, all pirates can be identified.

For example, supposing the user ID set to be {1, ..., n}, the colluders of the tracing object deciphering device are user IDs = $c_1$, $c_2$.

In this case, by giving the header information generated on the assumption that all user IDs other than user ID = $c_1$ are subject to revocation, since the tracing object deciphering device corresponds to user ID = $c_1$, the correct session key is obtained.

Similarly, by giving the header information generated on the assumption that all user IDs other than user ID = $c_2$ are subject to revocation, since the tracing object deciphering device corresponds also to user ID = $c_2$, the correct

session key is obtained.

In addition, by giving the header information generated on the assumption that all user IDs other than one user ID which does not correspond to user IDs = $c_1$, $c_2$ are subject to revocation, the correct session key cannot be obtained from the tracing object deciphering device.

Therefore, $c_1$ and $c_2$ are detected as the user IDs of the colluders of the tracing object deciphering device.

(Procedure example 2)

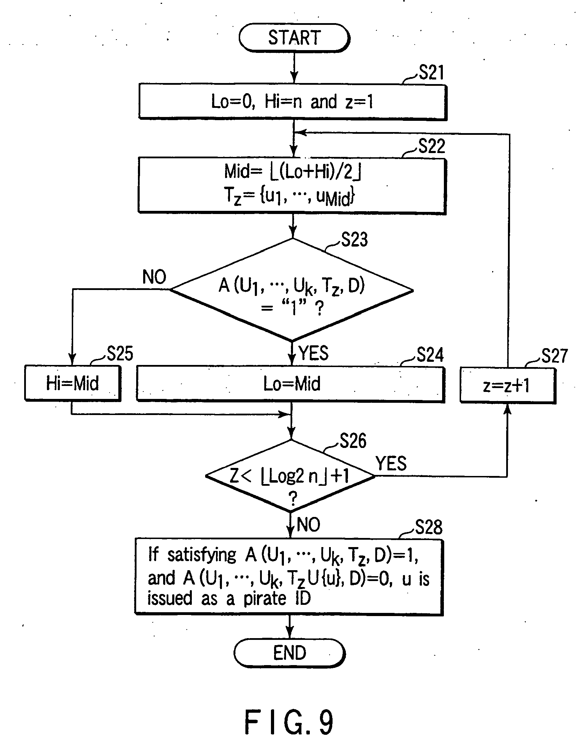

FIG. 9 shows another example of the processing procedure of tracing algorithm according to the arrangement.

In this tracing method, by means of binary search, one of the pirates is identified by inspecting $/\log_2 n/ + 1$ times. In this case, $/\log_2 n/$ refers to the maximum integer not exceeding $\log_2 n$. In this case, the required number of processing steps is O (logn).

Same as in the example 1, elements of subsets $U_1$, ..., $U_k$ are supposed to be labeled as shown in formula (9).

Setting at $L_o = 0$, $H_i = n$, and $z = 1$ (S21), $z = 1$, ..., $/\log_2 n/+1$ are processed as follows (S26, S27).

Substituting Mid = $/((L_o+H_i)/2)/$ (that is, the maximum integer not exceeding $(L_o+H_i)/2$), and $T_z = \{u_1, ..., u_{Mid}\}$ (S22), the input is supposed to be $U_1$, ..., $U_k$, $T_z$, D, and the above algorithm "A" (see FIG. 8) is executed (S23).

When the output of algorithm "A" ($U_1$, ..., $U_k$, $T_z$, D) is "1", $L_o$ = Mid is placed (S24). When the output is "0", $H_i$ = Mid is placed (S25).

If $z < /\log_2 n/+1$ in step S26, z is incremented by 1 (S27), and the process returns to S22.

If $z = /\log_2 n/+1$ in step S26, going out of the processing loop, concerning a certain z ($z = 1$, ..., $/10g_2 n/+1$), the person u satisfying A ($U_1$, ..., $U_k$, z, D) = "1" and A ($U_1$, ..., $U_k$, $T_z U\{u\}$, D) = "0" is determined and outputted as a pirate ID (S28).

(Procedure example 3)

In the example 2, the number of suspects increases or decreases differently in each black-box test since binary search is used, but it may be also possible to perform black-box test in each of which the number of suspects increases just by one.

According to this arrangement, the session key as the decipher key for ciphered data can be deciphered with the decipher key generated by the key generating method explained above, and the decipher keys of an arbitrary number of users can be revoked. The decipher keys can be revoked by ciphering the session key such that the session key may not be obtained by using the decipher keys of users subject to revocation (one or plural specific users), and that it can be deciphered by using decipher keys of other users.

Further, in this arrangement, when identifying a pirate from the pirate deciphering unit in which the decipher key generated by the above key generating method is embedded, the colluders can be identified only by observing the inputs and outputs of the pirate deciphering unit only, without breaking open the pirate deciphering units constructed by the colluders. In the arrangement, by applying such key generating method or key distributing method, the limitation in the number of suspects that can be inspected at once can be eliminated.

Other arrangements will be described. The same portions as those of the first arrangement will be indicated in the same reference numerals and their detailed description will be omitted.

Second arrangement

A second arrangement will be described.

Mainly different points from the first arrangement are explained.

The configuration of the data communication system according to the arrangement is same as in FIG. 1. Also same as in the first arrangement, plural contents providing systems 1 may be present, one node may have both function of contents providing system and function of user system, and all nodes may have both function of contents providing system and function of user system so as to communicate with each other by ciphering. Variations about the network 3 are also same as in the first arrangement.

An example of overall sequence of the arrangement is same as in FIG. 2.

Each user system 2 is assigned with individual user identification information (user ID) same as in the first arrangement.

If there is an user ID for revoking the decipher key, same as in the first arrangement, the contents providing system 1 generates header information on the basis of one or plural user IDs subject to revocation, so that the correct session key may not be acquired in step S105 of FIG. 2 as for the user system 2 having the user ID subject to revocation (therefore, the ciphered-contents cannot be deciphered in step S106 of FIG. 2), and allows to acquire the correct session key in S105 of FIG. 2 as for the user system 2 having a user ID other than the user ID subject to revocation (hence, the ciphered-contents can be deciphered in S106 of FIG. 2).

In this arrangement, same as in the first arrangement, the user's decipher key is generated by substituting the user ID in the key generation polynomial, and the user set is divided into plural subgroups, and a different key generation polynomial is assigned to each subgroup, and the decipher key of each user ID is generated by using the key generation polynomial assigned to the subgroup to which each user ID belongs. As a result, the decipher keys of an arbitrary number of users can be revoked, and the number of processing steps required for the black-box tracing can be reduced drastically.

An example of the configuration of the ciphering device 10 to be used in the contents providing system 1 of the arrangement is same as in FIG. 3.

The contents providing system 1 of the arrangement, same as in the first arrangement, also comprises other devices as required such as a communication interface, a device for storing contents, and a device for inputting contents.

An example of the configuration of the deciphering device 20 to be used in the user system 2 of the arrangement also comprises, same as in the first arrangement, other devices as required such as a communication interface, a device for storing contents, and a device for displaying contents.

An outline of the mechanism of deciphering the session key from the header information is briefly explained below.

First, as shown in FIG. 5B (underline shows the user subject to revocation), when revoking user IDs = 1, 2, 3 only, it is designed to decipher the session key only when four pieces of data (shares mentioned below) are prepared. For the simplicity of explanation, the number of users subject to revocation is supposed to be equal to the maximum number of pirates in a coalition, and the session key can be deciphered only when the number of prepared shares is that of revoked users plus one.

The header information includes the share $(1, g^{F(1)})$ about user ID = 1, the share $(2, g^{F(2)})$ about user ID = 2, the share $(3, g^{F(3)})$ about user ID = 3, and also the information as the source of determining the share $(x_0, g^{F(x0)})$ about a given user ID = $x_0$.

As for other user IDs than user IDs = 1, 2, 3, since the necessary four shares are prepared by determining the share $(x_0, g^{F(x0)})$ about the given user ID = $x_0$, a correct session key can be acquired.

By contrast, as for user ID = 1, even if the share $(1, g^{F(1)})$ corresponding to user ID = 1 is determined, it is duplicate with the share described in the header information, all necessary four pieces of data are not prepared, and the correct session key cannot be acquired. It is the same in user IDs = 2, 3.

Next, as shown in FIG. 5C, when all revoke user IDs = 1 to 20 belong to the same subgroup $U_1$, none of the shares of revoked users is used, but one subgroup $U_1$ is entirely revoked. To revoke one entire subgroup $U_1$, a wrong value (random number, etc.) is described in information used only by the subgroup $U_1$ as the source of calculation of a session key such that correct session key may not be obtained by this subgroup $U_1$.

In the user ID belonging to the subgroup $U_1$, since the information as the source of calculation of a session key is a wrong value, a correct session key cannot be obtained.

Further, as shown in FIG. 5D, when revoking the user IDs = 1 to 20, that is, one entire subgroup $U_1$, and also revoking user IDs = 21, 22, 23, the method shown in FIG. 5B and the method shown in FIG. 5C are combined to be executed. To explain simply, when the number of users subject to revocation not belonging to the subgroup to be revoked completely is equal to the maximum number of people in collusion pirates in a coalition, the number of shares necessary for deciphering the session key is the number of users subject to revocation not belonging to the subgroup to be revoked completely plus one.

In this case, the share $(21, g^{F(21)})$ about user ID = 21, the share $(22, g^{F(22)})$ about user ID = 22, and the share $(23, g^{F(23)})$ about user ID = 23 are described in the header information. In order that correct share may not be obtained by users of the subgroup $U_1$, a wrong value (random number, etc.) is described in the information used only by the subgroup $U_1$ as the source of calculation of the share. In other subgroups, in order that correct shares may be obtained, a correct value is described in the information used by the pertinent subgroup as the source of calculation of the share.

In user IDs other than user ID belonging to the subgroup $U_1$ and other than user IDs = 21, 22, 23, a correct share can be obtained, and four necessary pieces of data are prepared, so that a correct session key can be acquired.

As for user IDs = 21, 22, 23, even if the correct share can be obtained, four necessary pieces of data are not prepared, and the correct session key cannot be acquired.

In user ID belonging to the subgroup $U_1$, since the information as the source of calculation of a correct share is a wrong value, all four correct shares are not prepared, and hence the correct session key cannot be acquired.

The following is a detailed description about key generating phase, ciphering phase, and deciphering phase.

First, parameters are defined.

It is assumed that the total number of users is n and the maximum number of pirates in a coalition is k.

Assuming p and q are prime numbers, q divides p-1 without remainder, and q is n+k+1 or more.

Assume $Zq = \{0, 1, ..., q-1\}$.

Assume $Zp^* = \{1, ..., p-1\}$.

Assume g is q-th root of unity over $Zp^*$.

Assume Gq is a subgroup of Zp*, and is a multiplicative group of order q.

Assume a user set (a set of user identification information (user numbers)) is U (U $\subseteq$ Zq - {0}). Herein, Zq - {0} means the result of removing {0} from Zq.

Assume a set of users subject to revocation (a set of users whose decipher keys are revoked) to be $\chi$.

Values of p, q, and g are public.

Unless otherwise specified, hereinafter, calculation is done over Zp*.

(Key generating phase)

As the source of a public key, parameters $a_0$, ..., $a_k$, $b_1$, ..., $b_k$ are selected at random in Zq. The session key is $g^{C_0}$.

Next, a public key e is calculated.

The public key e is as shown in formula (2).

Further, the user set U is divided into k disjoint subsets (k is the maximum number of pirates in a coalition). Assume these k subsets to be $U_1$, ..., $U_k$. These $U_1$,..., $U_k$ are public.

Finally, a user u belonging to a subset $U_i$ (user ID of user u is u) is provided with a decipher key $f_i(u)$ (the value obtained by substituting x = u in the key generation polynomial $f_i(x)$ assigned to the subset $U_i$ to which the user u belongs). Herein, the key generation polynomial $f_i(x)$ is expressed as shown in formula (3).

(Ciphering phase)

It is determined whether or not the set (defined to be Y) taking away all subsets $U_z$ (for example, $U_1$ in FIG. 5D) which satisfy $U_z \subseteq \chi$ from the set $\chi$ of users subject to revocation (for example, {1, 2, ..., 23} in FIG. 5D) is an empty set. If Y is not an empty set, it is supposed to be {$x_1$, ..., $x_w$} (for example, in the case of FIG. 5D, it is {$x_1$, ..., $x_3$} = {21, 22, 23} (w = 3)). Next, an integer d satisfying the formula $d(k+1) \leq w \leq d(k+1)+k$ is searched, and m = d(k+1)+k is obtained. On the other hand, if Y is an empty set (for example, in the case of FIG. 5C), or the set $\chi$ of users subject to revocation is an empty set (for example, in the case of FIG. 5A), we obtain m = k, w = 0.

Next, $c_0$, ..., $c_m$ are selected in Zq at random, and if w < m, $x_{w+1}$, ..., $x_m$ are selected at random from Zq - (U+ {0}). Herein, Zq - (U+{0}) is the result of removing the union of U and {0} from Zq. Header h(r, $\chi$) is calculated according to formula (10).

$$h(r, \chi) = \{h, h_{0,0}, \cdots, h_{0,m}, h_{1,1}, \cdots, h_{1,m}, H_1, \cdots, H_m\} \cdots (10)$$

$$h = g^r \qquad\qquad \cdots (10 - 1)$$

$$h_{0,j} = y_{0,z_j}^r g^{c_j} \qquad\qquad \cdots (10 - 2)$$

$$z_j = j \bmod (k + 1) \qquad\qquad \cdots (10 - 3)$$

$$h_{1,j} = \begin{cases} g^{r_j} & (U_{z_j} \subseteq \chi, z_j \neq 0) \\ y_{1,z_j}^r g^{c_j} & (U_{z_j} \not\subseteq \chi, z_j \neq 0) \end{cases} \qquad \cdots (10 - 4)$$

$$H_j = \left(x_j, g^{F(x_j)}\right) \qquad\qquad \cdots (10 - 5)$$

$$F(x) = \sum_{j=0}^{m} c_j x^j \bmod q \qquad \cdots (10 - 6)$$

where r and $r_j$ are random numbers.

$(j \in \{z \mid 1 \le z \le m, z \not\equiv 0 \pmod{k+1}}, U_{z \bmod (k+1)} \subseteq \chi\})$

When $z_j = 0$, $h_{1,j}$ is not needed, and is not included in the header.

For example, as in the case of FIG. 5D, $H_1 = (21, g^{F(21)})$, $H_2 = (22, g^{F(22)})$, $H_3 = (23, g^{F(23)})$, and the like.

Here, r and rj are random numbers generated by the contents distributor, and the header can be calculated by using the public key e, so that any one may be a contents distributor.

The session key is $g^{C_0} = g^{F(0)}$, and the header h(r, $\chi$) and the contents ciphered with session key are transmitted to the user.

(Deciphering phase)

Assume a user $x_0$ belongs to a subset $U_i$. When the user $x_0$ is not an element of the set $\chi$ of users subject to revocation, that is, the user $x_0$ is not subject to revocation, a share $g^{F(x_0)}$ for calculating the session key is calculated as shown in formula (11).

$$g^{F(x_0)} = D_i(x_0) \Big/ h^{f_i(x_0)\sum_{j=0}^{d} x_0^{j(k+1)}} \qquad \cdots (11)$$

$$d = (m - k) / (k + 1) \qquad \cdots (11 - 1)$$

$$D_i(x_0) = \prod_{j=0}^{m} B_{i,j}^{x_0^j} \qquad \cdots (11 - 2)$$

$$B_{i,j} = \begin{cases} h_{0,j} & (i \ne j \bmod (k + 1)) \\ h_{1,j} & (i = j \bmod (k + 1)) \end{cases} \qquad \cdots (11 - 3)$$

Using this share $g^{F(x_0)}$, a session key $g^{F(0)}$ is calculated as shown in formula (12).

$$g^{F(0)} = \prod_{j=0}^{m} \left( g^{F(x_j)} \right)^{L_j} \qquad \cdots (12)$$

$$L_j = \prod_{0 \le l \le m, l \ne j} \frac{x_l}{x_l - x_j} \bmod q \qquad \cdots (12 - 1)$$

A tracing device of this arrangement is basically same as in the first arrangement.

The procedure examples of tracing algorithm of the arrangement are also basically same as the procedure examples 1 to 3 of the first arrangement. In this arrangement, however, part of the procedure examples 1 and 2 are modified from the first arrangement. Of course, the specific tracing algorithm may be varied and is not limited to the procedure examples 1 to 3.

(Procedure example 1)

An example of a processing procedure (Procedure example 1) of tracing algorithm according to the arrangement is same as in FIG. 7.

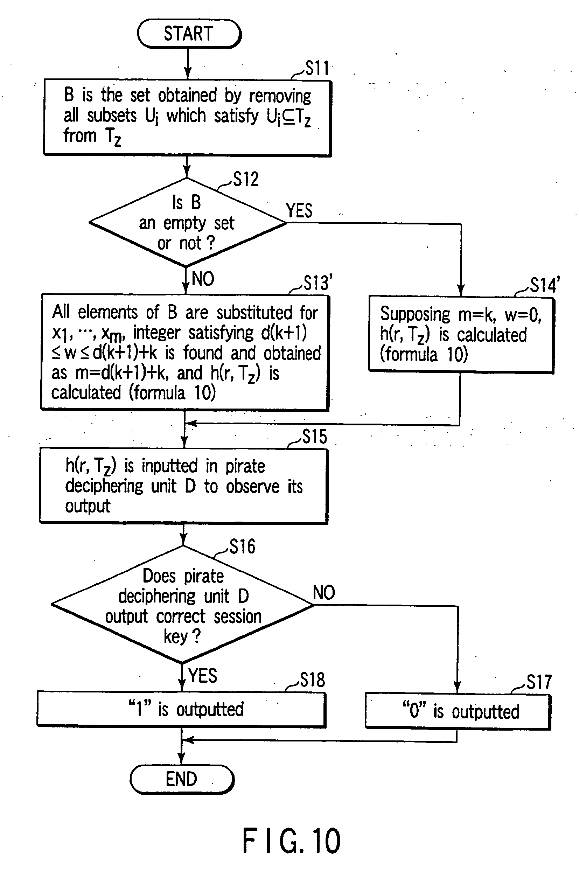

FIG. 10 shows an example of a processing procedure of algorithm "A" in step S3 of FIG. 7.

The difference between the procedure example of algorithm "A" in FIG. 10 of the arrangement and the procedure example of algorithm "A" in FIG. 8 of the first arrangement lies in step S13' and step S14' in FIG. 10, provided in place of step S13 and step S14 in FIG. 8.

That is, in the procedure example 1 of the arrangement, after determining whether or not B is an empty set in step S12, if B is not an empty set, all elements of B are substituted for $x_1$, ..., $x_w$, an integer d satisfying the formula d $(k+1) \leq w \leq d(k+1)+k$ is searched, and m = d(k+1)+k is obtained, and $h(r, T_z)$ is calculated according to formula (10) (S13'). On the other hand, if B is an empty set, supposing m = k, w = 0, $h(r, T_z)$ is calculated according to formula (10) (S14').

(Procedure example 2)

Another example of a processing procedure (Procedure example 2) of tracing algorithm according to the arrangement is also same as in FIG. 9. In this case, algorithm "A" executed in step S23 is same as in FIG. 10.

In the foregoing arrangements, the maximum number of divided subgroups is k, and when desired to increase the number of subgroups, the value of k must be increased and a new key generation polynomial must be established. For example, to increase the maximum number of divided subgroups to $M \cdot k + \Delta k$ (supposing $1 \leq M$, $0 < \Delta k \leq k$), the key generation polynomials $f_1(x)$ to $f_{M \cdot k + \Delta k}(x)$ corresponding to subgroups $U_1$ to $U_{M \cdot k + \Delta k}$ are as shown in formula (13). In this case, the public key and header may be changed (by adding elements) corresponding to each.

$$f_1(x) = a_0 + b_1 \cdot x + a_2 \cdot x^2 + a_3 \cdot x^3 + \ldots + a_{M \cdot k + \Delta k} \cdot x^{M \cdot k + \Delta k}$$

$$f_2(x) = a_0 + a_1 \cdot x + b_2 \cdot x^2 + a_3 \cdot x^3 + \ldots + a_{M \cdot k + \Delta k} \cdot x^{M \cdot k + \Delta k}$$

$$f_{M \cdot k + \Delta k}(x) = a_0 + a_1 \cdot x + a_2 \cdot x^2 + a_3 \cdot x^3 + \ldots + b_{M \cdot k + \Delta k} \cdot x^{M \cdot k + \Delta k} \qquad \ldots (13)$$

In the case of M = 1, and $\Delta k = k$, calculate according to formula (14).

$$f_1(x) = a_0 + b_1 \cdot x + a_2 \cdot x^2 + a_3 \cdot x^3 + \ldots + a_{2k} \cdot x^{2k}$$

$$f_2(x) = a_0 + a_1 \cdot x + b_2 \cdot x^2 + a_3 \cdot x^3 + \ldots + a_{2k} \cdot x^{2k}$$

$$\vdots$$

$$f_{2k}(x) = a_0 + a_1 \cdot x + a_2 \cdot x^2 + a_3 \cdot x^3 + \ldots + b_{2k} \cdot x^{2k} \qquad \ldots (14)$$

Moreover, various other methods are also possible.

For example, when dividing into $M \cdot k + \Delta k$ ($0 \leq M$, $0 < \Delta k \leq k$) subgroups, in a subgroup expressed by $m \cdot k + i$ ($0 \leq m \leq M$, and (i) $1 \leq i \leq k$ when $0 \leq m < M$, (ii) $1 \leq i \leq \Delta k$ when m = M), the key generation polynomial expressed in formula (15) may be assigned.

$$f_{m \cdot k+i}(x) = a_0 + a_1 \cdot x + a_2 \cdot x^2 + a_3 \cdot x^3 + \ldots$$
$$+ b_{m,i} \cdot x^i + \ldots + a_{k-2} \cdot x^{k-2} + a_{k-1} \cdot x^{k-1} + a_k \cdot x^k$$
$$\ldots (15)$$

In this case, supposing $b_{m,i}$ at $m = 0$, the coefficients, that is, $b_{0,1}, \ldots, b_{0,k}$ correspond to $b_1, \ldots, b_k$ in the foregoing explanation, respectively. In the following explanation, $b_{0,1}, \ldots, b_{0,k}$ are abbreviated as $b_1, \ldots, b_k$, and $b_{1,1}, \ldots, b_{1,k}$ may be abbreviated as $d_1, \ldots, d_k$.

For example, supposing $M = 1$ in the above example, without increasing the value of k, only by adding $d_1, \ldots, d_{\Delta k}$ in the key generating phase (in formula (15), $b_{1,1}, \ldots, b_{1,\Delta k}$), the types (number of subgroups) of key generation polynomial may be increased according to formula (16).

$$f_1(x) = a_0 + b_1 \cdot x + a_2 \cdot x^2 + a_3 \cdot x^3 + \ldots + a_k \cdot x^k$$
$$f_2(x) = a_0 + a_1 \cdot x + b_2 \cdot x^2 + a_3 \cdot x^3 + \ldots + a_k \cdot x^k$$
$$\vdots$$
$$f_k(x) = a_0 + a_1 \cdot x + a_2 \cdot x^2 + a_3 \cdot x^3 + \ldots + b_k \cdot x^k$$
$$f_{k+1}(x) = a_0 + d_1 \cdot x + a_2 \cdot x^2 + a_3 \cdot x^3 + \ldots + a_k \cdot x^k$$
$$f_{k+2}(x) = a_0 + a_1 \cdot x + d_2 \cdot x^2 + a_3 \cdot x^3 + \ldots + a_k \cdot x^k$$
$$\vdots$$
$$f_{k+\Delta k}(x) = a_0 + a_1 \cdot x + a_2 \cdot x^2 + \ldots + d_{\Delta k} \cdot x^{\Delta k}$$
$$+ \ldots + a_k \cdot x^k$$

$$\ldots (16)$$

In the case of $M = 1$, and $\Delta k = k$, calculate according to formula (17).

$$f_1(x) = a_0 + b_1 \cdot x + a_2 \cdot x^2 + a_3 \cdot x^3 + \ldots + a_k \cdot x^k$$
$$f_2(x) = a_0 + a_1 \cdot x + b_2 \cdot x^2 + a_3 \cdot x^3 + \ldots + a_k \cdot x^k$$
$$\vdots$$
$$f_k(x) = a_0 + a_1 \cdot x + a_2 \cdot x^2 + a_3 \cdot x^3 + \ldots + b_k \cdot x^k$$
$$f_{k+1}(x) = a_0 + d_1 \cdot x + a_2 \cdot x^2 + a_3 \cdot x^3 + \ldots + a_k \cdot x^k$$
$$f_{k+2}(x) = a_0 + a_1 \cdot x + d_2 \cdot x^2 + a_3 \cdot x^3 + \ldots + a_k \cdot x^k$$
$$\vdots$$
$$f_{2k}(x) = a_0 + a_1 \cdot x + d_2 \cdot x^2 + a_3 \cdot x^3 + \ldots + d_k \cdot x^k$$

$$\ldots (17)$$

Moreover, in the case of $M > 2$, by similarly adding parameters properly, the types (number of subgroups) of key generation polynomial may be increased.

Incidentally, by increasing the value of k and adding parameters, types (number of subgroups) of key generation polynomial may be also increased.

As explained so far, in the case of describing the information used by each subgroup in the header information as the source of calculation of the share, to revoke one or plural specific subgroups, a wrong value (random number or the like) is described in the information used by the one or plural specific subgroups as the source of calculation of the share such that the correct share may not be obtained. A correct value is described in the information used by the other subgroups as the source of calculation of the share such that the correct share may be obtained. Instead, for example, as for one or plural specific subgroups to be revoked, it may be prohibited to describe the information used by the one or plural specific subgroups in the header information as the source of calculation of the share. In the other subgroups, it may be allowed to describe the information (correct information) used by the other subgroups in the header information as the source of calculation of the share. In this way, in the one or plural subgroups to be revoked, since the information as the source of calculation of the share is not included, and a correct share cannot be obtained, while correct shares can be obtained in the other subgroups.

While the description above is applicable to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein. For example, the present invention can be practiced as a computer readable recording medium in which a program for allowing the computer to function as predetermined means, allowing the computer to realize a predetermined function, or allowing the computer to conduct predetermined means.

The ciphering device, deciphering device, and tracing device can be realized as both hardware such as a semiconductor integrated device and software (a program for causing a computer to execute specified means, a computer to function as specified means, or a computer to realize a specified function). Of course, the hardware and software can be combined to realize these functions.

The invention relating to the apparatus may be established as the invention relating to the method, and the invention relating to the method may be established as the invention relating to the apparatus.

Similarly, the arrangement relating to the contents providing system/method may be also established as the arrangement relating to the ciphering device/method, and the arrangement relating to the user providing system/method may be also established as the arrangement relating to the deciphering device/method.

The configurations shown in the embodiments of the invention are mere examples, and are not intended to exclude other configurations, and other configurations are possible by replacing part of the illustrated configurations with other, omitting part of the illustrated configurations, adding other functions or elements to the illustrated configurations, or combining them. Further, examples include another configuration logically equivalent to any illustrated configuration, another configuration including part logically equivalent to any illustrated configuration, and another configuration logically equivalent to essential parts of any illustrated configuration. More examples include another configuration achieving the same or similar object as any illustrated configuration, and another configuration having the same or similar effect as any illustrated configuration.

Variations of components of the illustrated embodiments of the invention may be realized by combining properly.

The embodiments of the invention include and contain the invention relating to individual viewpoints, stages, concepts and categories such as the invention as individual apparatus, invention about two or more mutually related devices, invention as entire system, invention about constituent parts of inside of individual devices, and invention about corresponding methods.

**Claims**

1. A method of generating a decipher key in a system in which content ciphered with a session key (S103) and a header are provided to one or more users assigned with individual user identification information (S104), the header enabling the session key to be obtained by using one or more decipher keys, and a user being enabled to obtain the session key by using the header and a decipher key assigned to the user (S105), and decipher the ciphered-contents by using the session key (S106), comprising:

   dividing group user identification information for a group of users into subgroups ($U_1$, $U_2$, $U_3$, ..., $U_k$);
   assigning different key generation polynomials to the respective subgroups ($U_1$, $U_2$, $U_3$, ..., $U_k$); and
   generating a decipher key by substituting the user identification information in the key generation polynomial assigned to the subgroup ($U_1$, $U_2$, $U_3$, ..., $U_k$) to which the user identification information of the user belongs.

2. The method according to Claim 1, in which each key generation polynomial comprises polynomial coefficients at least part of which is different from polynomial coefficients of any other key generation polynomial.

3. The method according to Claim 1, wherein the group user identification information is divided into k subgroups ($U_1$, $U_2$, $U_3$, ..., $U_k$) and an i-th subgroup ($U_i$), where $1 \leq i \leq k$, is assigned with a key generation polynomial:

$f_i(x) = a_0 + a_1 \cdot x + a_2 \cdot x^2 + a_3 \cdot x^3 + ... + b_i \cdot x^i + ... + a_{k-2} \cdot x^{k-2} + a_{k-1} \cdot x^{k-1} + a_k \cdot x^k$, where $a_0$ to $a_{i-1}$, and $a_{i+1}$ to $a_k$ are polynomial coefficients, $b_i$ is a polynomial coefficient unique to the i-th subgroup, i and k represent positive integers and x is an input variable.

4. The method according to Claim 1, wherein the group user identification information is divided into $M \cdot k + \Delta k$ subgroups ($U_1$, $U_2$, $U_3$, ..., $U_k$), where $0 \leq M$, $0 < \Delta k \leq k$, and a subgroup expressed by $m \cdot k + i$, where $0 \leq m \leq M$, and (i) $1 \leq i \leq k$ when $0 \leq m < M$, (ii) $1 \leq i \leq \Delta k$ when $m = M$, is assigned with a key generation polynomial:

$f_{m \cdot k + i}(x) = a_0 + a_1 \cdot x + a_2 \cdot x^2 + a_3 \cdot x^3 + ... + b_{m,i} \cdot x^i + ... + a_{k-2} \cdot x^{k-2} + a_{k-1} \cdot x^{k-1} + a_k \cdot x^k$, where $a_0$ to $a_{i-1}$, $a_{i+1}$ to $a_k$ are polynomial coefficients $b_{m,i}$ is a polynomial coefficient unique to the subgroup expressed by $m \cdot k + i$, m and M represent non-negative integers, i, $\Delta k$ and k represent positive integers and x is an input variable.

5. A computer program generating a decipher key in a system in which content ciphered with a session key (S103) and a header are provided to one or more users assigned with individual user identification information (S104), the header enabling the session key to be obtained by using one or more decipher keys, and a user being enabled to obtain the session key by using the header and a decipher key assigned to the user (S105), and to decipher the ciphered-content by using the session key, operable to:

divide a group of user identification information of users into subgroups ($U_1$, $U_2$, $U_3$, ..., $U_k$);
assign different key generation polynomials to the respective subgroups; and
generate a decipher key by substituting the user identification information in the key generation polynomial assigned to the subgroup ($U_1$, $U_2$, $U_3$, ..., $U_k$) to which the user identification information of the user belongs.

6. The computer program according to Claim 5, wherein each key generation polynomial comprises polynomial coefficients at least part of which is different from polynomial coefficients of any other key generation polynomial.

7. The computer program according to Claim 5, further operable to divide the group user identification information into k subgroups ($U_1$, $U_2$, $U_3$, ..., $U_k$) and to assign an i-th subgroup ($U_i$), where $1 \leq i \leq k$, with a key generation polynomial:

$f_i(x) = a_0 + a_1 \cdot x + a_2 \cdot x^2 + a_3 \cdot x^3 + ... + b_i \cdot x^i + ... + a_{k-2} \cdot x^{k-2} + a_{k-1} \cdot x^{k-1} + a_k \cdot x^k$, where $a_0$ to $a_{i-1}$, and $a_{i+1}$ to $a_k$ are polynomial coefficients, $b_i$ is a polynomial coefficient unique to the i-th subgroup, i and k represent positive integers and x is an input variable.

8. The computer program according to Claim 5, further operable to divide the group user identification information into $M \cdot k + \Delta k$ subgroups ($U_1$, $U_2$, $U_3$, ..., $U_k$), where $0 \leq M$, $0 < \Delta k \leq k$, and to assign a subgroup expressed by $m \cdot k + i$, where $0 \leq m \leq M$, and (i) $1 \leq i \leq k$ when $0 \leq m < M$, (ii) $1 \leq i \leq \Delta k$ when $m = M$, with a key generation polynomial:

$f_{m \cdot k + i}(x) = a_0 + a_1 \cdot x + a_2 \cdot x^2 + a_3 \cdot x^3 + ... + b_{m,i} \cdot x^i + ... + a_{k-2} \cdot x^{k-2} + a_{k-1} \cdot x^{k-1} + a_k \cdot x^k$, where $a_0$ to $a_{i-1}$, $a_{i+1}$ to $a_k$ are polynomial coefficients $b_{m,i}$ is a polynomial coefficient unique to the subgroup expressed by $m \cdot k + i$, m and M represent non-negative integers, i, $\Delta k$ and k represent positive integers and x is an input variable.

9. A decipher key generating apparatus for use in a system in which content ciphered with a session key (S103) and a header are provided to one or more users assigned with individual user identification information (S104), the header enabling the session key to be obtained by using one or more decipher keys, and a user being enabled to obtain the session key by using the header and a decipher key assigned to the user (S105), and to decipher the ciphered-content by using the session key, comprising:

dividing means arranged to divide a group user identification information for a group of users into subgroups ($U_1$, $U_2$, $U_3$, ..., $U_k$);
assigning means arranged to assign different key generation polynomials to the respective subgroups; and
decipher key generating means arranged to generate a decipher key by substituting the user identification information in the key generation polynomial assigned to the subgroup ($U_1$, $U_2$, $U_3$, ..., $U_k$) to which the user identification information of the user belongs.

10. The decipher key generating apparatus according to Claim 9, wherein each key generation polynomial comprises polynomial coefficients at least part of which is different from polynomial coefficients of any other key generation polynomial.

11. The decipher key generating apparatus according to Claim 9, wherein the dividing means is further arranged to divide the group user identification information into k subgroups ($U_1$, $U_2$, $U_3$, ..., $U_k$), and the assigning means is further arranged to assign an i-th subgroup ($U_i$), where $1 \leq i \leq k$, with a key generation polynomial:

$f_i(x) = a_0 + a_1 \cdot x + a_2 \cdot x^2 + a_3 \cdot x^3 + ... + b_i \cdot x^i + ... + a_{k-2} \cdot x^{k-2} + a_{k-1} \cdot x^{k-1} + a_k \cdot x^k$, where $a_0$ to $a_{i-1}$, and $a_{i+1}$ to $a_k$ are polynomial coefficients, $b_i$ is a polynomial coefficient unique to the i-th subgroup, i and k represent positive integers and x is an input variable.

12. The decipher key generating apparatus according to Claim 9, wherein the dividing means is further arranged to divide the group user identification information into $M \cdot k + \Delta k$ subgroups ($U_1$, $U_2$, $U_3$, ..., $U_k$), where $0 \leq M$, $0 < \Delta k \leq k$, and the assigning means is further arranged to assign a subgroup expressed by $m \cdot k + i$, where $0 \leq m \leq M$, and (i) $1 \leq i \leq k$ when $0 \leq m < M$, (ii) $1 \leq i \leq \Delta k$ when m = M, with a key generation polynomial:

$f_{m \cdot k+i}(x) = a_0 + a_1 \cdot x + a_2 \cdot x^2 + a_3 \cdot x^3 + ... + b_{m,i} \cdot x^i + ... + a_{k-2} \cdot x^{k-2} + a_{k-1} \cdot x^{k-1} + a_k \cdot x^k$, where $a_0$ to $a_{i-1}$, $a_{i+1}$ to $a_k$ are polynomial coefficients $b_{m,i}$ is a polynomial coefficient unique to the subgroup expressed by $m \cdot k + i$, m and M represent non-negative integers, i, $\Delta k$ and k represent positive integers and x is an input variable.

## Patentansprüche

1. Ein Verfahren zum Erzeugen eines Dechiffrierschlüssels in einem System, in dem ein mit einem Arbeitssitzungsschlüssel chiffrierter Inhalt (S103) und ein Nachrichtenkopf einem oder mehreren Benutzern, denen individuelle Benutzer-Identifizierungsinformation zugeordnet ist, bereitgestellt werden (S104), wobei der Nachrichtenkopf ermöglicht, dass der Arbeitssitzungsschlüssel erhalten wird durch Benutzen von einem oder mehreren Dechiffrierschlüsseln, und ein Benutzer in die Lage versetzt wird, den Arbeitssitzungsschlüssel durch Benutzen des Nachrichtenkopfs und eines dem Benutzer zugewiesenen Dechiffrierschlüssels zu erhalten (S105), und den chiffrierten Inhalt unter Verwendung des Arbeitssitzungsschlüssels (S106) zu dechiffrieren, umfassend:

Unterteilen von Gruppenbenutzer-Identifizierungsinformation für eine Gruppe von Benutzern in Untergruppen ($U_1$, $U_2$, $U_3$, ..., $U_k$) ;
Zuweisen von verschiedenen Schlüsselerzeugungspolynomen an die entsprechenden Untergruppen ($U_1$, $U_2$, $U_3$, ..., $U_k$); und
Erzeugen eines Dechiffrierschlüssels durch Ersetzen der Benutzer-Identifizierungsinformation in den Schlüsselerzeugungspolynomen, die zugewiesen sind an die Untergruppen ($U_1$, $U_2$, $U_3$, ... , $U_k$), zu denen die Benutzer-Identifizierungsinformation des Benutzers gehört.

2. Das Verfahren nach Anspruch 1, in dem jedes Schlüsselerzeugungspolynom Polynomkoeffizienten umfasst, von denen mindestens ein Teil bzw. einige verschieden sind von den Polynomkoeffizienten von jedem anderen Schlüsselerzeugungspolynom.

3. Das Verfahren nach Anspruch 1, wobei die Gruppenbenutzer-Identifizierungsinformation in k Untergruppen ($U_1$, $U_2$, $U_3$, ..., $U_k$) unterteilt wird und eine i-te Untergruppe ($U_i$) mit $1 \leq i \leq k$, einem Schlüsselerzeugungspolynom zugewiesen wird:

$f_i(x) = a_0 + a_1 \cdot x + a_2 \cdot x^2 + a_3 \cdot x^3 + ... + b_i \cdot x^i + ... + a_{k-2} \cdot x^{k-2} + a_{k-1} \cdot x^{k-1} + a_k \cdot x^k$, wobei $a_0$ bis $a_{i-1}$ und $a_{i-1}$ bis $a_k$ Polynomkoeffizienten sind, $b_i$ ein für die i-te Untergruppe eindeutiger Polynomkoeffizient ist, i und k positive Ganzzahlen darstellen und x eine Eingabevariable ist.

4. Das Verfahren nach Anspruch 1, wobei die GruppenBenutzer-Identifizierungsinformation in $M \cdot k + \Delta K$ Untergruppen ($U_1$, $U_2$, $U_3$, ..., $U_k$) unterteilt wird, wobei $0 \leq M$, $0 < \Delta k \leq k$, und wobei einer Untergruppe ausgedrückt durch $m \cdot k + i$ mit $0 \leq m \leq M$ und (i) $1 \leq i \leq k$ wenn $0 \leq m < M$, (ii) $1 \leq i \leq \Delta k$ wenn m = M, ein Schlüsselerzeugungspolynom zugewiesen wird:

$f_{m \forall k+i}(x) = a_0 + a_1 \cdot x + a_2 \cdot x^2 + a_3 \cdot x^3 + ... + b_{m,i} \cdot x^i + ... + a_{k-2} \cdot x^{k-2} + a_{k-1} \cdot x^{k-1} + a_k \cdot x^k$, wobei $a_0$ bis $a_{i-1}$, $a_{i+1}$ bis $a_k$ Polynomkoeffizienten sind, $b_{m,i}$ ein für die durch $m \cdot k + i$ ausgedrückte Untergruppe eindeutiger Polynomkoeffizient ist, m und M nicht-negative Ganzzahlen darstellen, i, $\Delta$k und k positive Ganzzahlen darstellen und x eine Eingabevariable ist.

5. Ein Computerprogramm, das einen Dechiffrierschlüssel erzeugt in einem System, in dem ein mit einem Arbeitssitzungsschlüssel chiffrierter Inhalt (S103) und ein Nachrichtenkopf an einen oder mehrere Benutzer, denen individuelle Benutzer-Identifizierungsinformationen zugewiesen ist, bereitgestellt werden (S104), wobei der Nachrichtenkopf es ermöglicht, dass der Nachrichtenkopfschlüssel unter Verwendung von einem oder mehreren Dechiffrierschlüsseln erhalten wird und ein Benutzer in die Lage versetzt wird, den Arbeitssitzungsschlüssel durch Benutzen des Nachrichtenkopfs zu erhalten und einen dem Benutzer zugewiesenen Dechiffrierschlüssel (S105) und den chiffrierten Inhalt unter Verwendung des Arbeitssitzungsschlüssels zu dechiffrieren, wobei das Programm operativ in der Lage für folgendes ist:

Unterteilen einer Gruppe von Benutzer-Identifizierungsinformation von Benutzern in Untergruppen ($U_1$, $U_2$, $U_3$, ..., $U_k$) :
Zuweisen von verschiedenen Schlüsselerzeugungspolynomen an die entsprechenden Untergruppen; und
Erzeugen eines Dechiffrierschlüssels durch Ersetzen der Benutzer-Identifizierungsinformation in den Schlüsselerzeugungspolynomen, die zugewiesen sind an die Untergruppen ($U_1$, $U_2$, $U_3$, ..., $U_k$), zu denen die Benutzer-Identifizierungsinformation der Benutzer gehört.

6. Das Computerprogramm nach Anspruch 5, wobei jedes Schlüsselerzeugungspolynom Polynomkoeffizienten umfasst, von denen zumindest ein Teil verschieden ist von dem Polynomkoeffizienten von jedem beliebigen anderen Schlüsselerzeugungspolynom.

7. Das Computerprogramm nach Anspruch 5, ferner operativ in der Lage der Gruppenbenutzer-Identifizierungsinformation in k Untergruppen ($U_1$, $U_2$, $U_3$, ..., $U_k$) zu unterteilen und einer i-ten Untergruppe ($U_i$) mit $1 \leq i \leq k$, ein Schlüsselerzeugungspolynom zuzuweisen:

$f_i(x) = a_0 + a_1 \cdot x + a_2 \cdot x_2 + a_3 \cdot x^3 + ... + b_i \cdot x^i + ... + a_{k-2} \cdot x^{k-2} + a_{k-1} \cdot x^{k-1} + a_k \cdot x^k$, wobei $a_0$ bis $a_{i-1}$ und $a_{i+2}$ bis $a_k$ Polynomkoeffizienten sind, $b_i$ ein für die i-te Untergruppe eindeutiger Polynomkoeffizient ist, i und k positive Ganzzahlen darstellen und x eine Eingabevariable ist.

8. Das Computerprogramm nach Anspruch 5, ferner operativ dazu in der Lage, die Gruppenbenutzer-Identifizierungsinformation in $m \cdot k + \Delta k$ Untergruppen ($U_1$, $U_2$, $U_3$, ..., $U_k$) mit $0 \leq M$, $0 < \Delta k \leq k$ zu unterteilen, und einer durch $m \cdot k + i$ ausgedrückten Untergruppe, mit $0 \leq m \leq M$, und (i) $1 < i < k$, wenn $0 \leq m < M$, (ii) $1 \leq i \leq \Delta k$, wenn $m = M$, ein Schlüsselerzeugungspolynom zuzuweisen:

$f_{m \forall k+i}(x) = a_0 + a_1 \cdot x + a_2 \cdot x_2 + a_3 \cdot x^3 + ... V + b_{m,i} \cdot x^i + ... + a_{k-2} \cdot x^{k-2} + x_{k-1} \cdot x^{k-1} + a_k \cdot x^k$, wobei $a_0$ bis $a_{a-1}$, $a_{a+1}$ bis $a_k$ Polynomkoeffizienten sind, $b_{m,i}$ ein für die durch $m \cdot k + i$ ausgedrückte Untergruppe eindeutiger Koeffizient ist, m und M nicht negative Ganzzahlen darstellen, i, $\Delta$k und k positive Ganzzahlen darstellen und x eine Eingabevariable ist.

9. Eine Vorrichtung zum Erzeugen eines Dechiffrierschlüssels zur Verwendung in einem System, in ein dem mit einem Arbeitssitzungsschlüssel chiffrierter Inhalt (S103) und ein Nachrichtenkopf an einen oder mehrere Benutzer, denen individuelle Benutzer-Identifizierungsinformation zugewiesen ist, bereitgestellt werden (S104), wobei der Nachrichtenkopf es ermöglicht, dass der Arbeitssitzungsschlüssel durch Benutzen von einem oder mehreren Dechiffrierschlüsseln erhalten wird, und ein Benutzer dazu in die Lage versetzt wird, den Arbeitssitzungsschlüssel durch Verwenden des Nachrichtenkopfs und einem dem Benutzer zugewiesenen Dechiffrierschlüssel zu erhalten (S105), und zum Dechiffrieren des chiffrierten Inhalts unter Verwendung des Arbeitssitzungsschlüssels, die Vorrichtung umfassend:

Unterteilungsmittel eingerichtet zum Unterteilen einer Gruppenbenutzer-Identifizierungsinformation für eine Gruppe von Benutzern in Untergruppen ($U_1$, $U_2$, $U_3$, ..., $U_k$) ;
Zuweisungsmittel eingerichtet zum Zuweisen von verschiedenen Schlüsselerzeugungspolynomen an die entsprechenden Untergruppen; und
Dechiffrierschlüsselerzeugungsmittel eingerichtet zum Erzeugen eines Dechiffrierschlüssels durch Ersetzen der Benutzer-Identifizierungsinformation in den Schlüsselerzeugungspolynomen, die den Untergruppen ($U_1$, $U_2$, $U_3$, ... , $U_k$), zu denen die Benutzer-Identifizierungsinformation der Benutzer gehört, zugewiesen sind.

**10.** Die Dechiffrierschlüsselerzeugungsvorrichtung nach Anspruch 9, wobei jedes Schlüsselerzeugungspolynom Polynomkoeffizienten umfasst, von denen mindestens ein Teil bzw. einige verschieden sind von Polynomkoeffizienten von jedem beliebigen anderen Schlüsselerzeugungspolynom.

**11.** Die Dechiffrierschlüsselerzeugungsvorrichtung nach Anspruch 9, wobei das Unterteilungsmittel ferner dazu eingerichtet ist, die Gruppenbenutzer-Identifizierungsinformation in k Untergruppen ($U_1$, $U_2$, $U_3$, ..., $U_k$) zu unterteilen, und die Zuweisungsmittel ferner dazu eingerichtet sind, einer i-ten Untergruppe ($U_i$), mit $1 \leq i \leq k$, ein Schlüsselerzeugungspolynom zuzuweisen:

$$f_i(x) = a_0 + a_1 \cdot x + a_2 \cdot x^2 + a_3 \cdot x^3 + ... + b_i \cdot x^i + ... + a_{k-2} \cdot x^{k-2} + a_{k-1} \cdot x^{k-1} + a_k \cdot x^k,$$ wobei $a_0$ bis $a_{i-1}$ und $a_{i+1}$ bis $a_k$ Polynomkoeffizienten sind, $b_i$ ein für die i-te Untergruppe eindeutiger Polynomkoeffizient ist, i und k positive Ganzzahlen darstellen und x eine Eingabevariable ist.

**12.** Die Dechiffrierschlüsselerzeugungsvorrichtung nach Anspruch 9, wobei das Unterteilungsmittel ferner dazu eingerichtet ist, die Gruppenbenutzer-Identifizierungsinformation in $M \cdot k + \Delta k$ Untergruppen ($U_1$, $U_2$, $U_3$, ... , $U_k$) mit $0 \leq M$, $0 < \Delta k \leq k$ zu unterteilen, und die Zuweisungsmittel ferner dazu eingerichtet sind, einer durch $m \cdot k + i$ ausgedrückten Untergruppe mit $0 \leq m \leq M$, und (i) $1 \leq i < k$ wenn $0 \leq m < M$, (ii) $1 \leq i \leq \Delta k$ wenn $m = M$, ein Schlüsselerzeugungspolynom zuzuweisen:

$$f_{m \forall k+i}(x) = a_0 + a_1 \cdot x + a_2 \cdot x^2 + a_3 \cdot x^3 + ... + b_{m,i} \cdot x^i + ... + a_{k-2} \cdot x^{k-2} + a_{k-1} \cdot x^{k-1}...a_k \cdot x^k,$$ wobei $a_0$ bis $a_{i-1}$, $a_{i+1}$ bis $a_k$ Polynomkoeffizienten sind, $b_{m,i}$ ein für die durch $m.k+i$ ausgedrückte Untergruppe eindeutiger Polynomkoeffizient ist, m und M nicht-negative Ganzzahlen darstellen, i, $\Delta k$ und k positive Ganzzahlen darstellen und x eine Eingabevariable ist.

**Revendications**

**1.** Procédé de génération d'une clé de déchiffrage dans un système dans lequel un contenu chiffré avec une clé de session (S103) et un bloc d'identification sont délivrés à un ou plusieurs utilisateurs auxquels sont attribuées des informations d'identification d'utilisateur individuelles (S104), le bloc d'identification permettant d'obtenir la clé de session en utilisant une ou plusieurs clés de déchiffrage, et un utilisateur étant autorisé à obtenir la clé de session en utilisant le bloc d'identification et une clé de déchiffrage attribuée à l'utilisateur (S105) et à déchiffrer le contenu chiffré en utilisant la clé de session (S106), consistant à :

diviser des informations d'identification d'utilisateur de groupe pour un groupe d'utilisateurs en sous-groupes ($U_1$, $U_2$, $U_3$, ..., $U_k$) ;
attribuer des polynômes de génération de clé différents aux sous-groupes respectifs ($U_1$, $U_2$, $U_3$, ..., $U_k$) ; et
générer une clé de déchiffrage en remplaçant les informations d'identification d'utilisateur dans le polynôme de génération de clé attribué au sous-groupe ($U_1$, $U_2$, $U_3$, ..., $U_k$) auquel appartiennent les informations d'identification d'utilisateur de l'utilisateur.

**2.** Procédé selon la revendication 1, dans lequel chaque polynôme de génération de clé comprend des coefficients polynomiaux dont au moins une partie est différente de coefficients polynomiaux de n'importe quel autre polynôme de génération de clé.

**3.** Procédé selon la revendication 1, dans lequel les informations d'identification d'utilisateur de groupe sont divisées en k sous-groupes ($U_1$, $U_2$, $U_3$, ..., $U_k$) et à un ième sous-groupe ($U_i$), où $1 \leq i \leq k$, est attribué un polynôme de génération de clé :

$$f_i(x) = a_0 + a_1 \cdot x + a_2 \cdot x^2 + a_3 \cdot x^3 + ... + b_i \cdot x^i + ... + a_{k-2} \cdot x^{k-2} + a_{k-1} \cdot x^{k-1} + a_k \cdot x^k,$$ où $a_0$ à $a_{i-1}$ et $a_{i+1}$ à $a_k$ sont des coefficients polynomiaux, $b_i$ est un coefficient polynomial unique pour le ième sous-groupe, i et k représentent des entiers positifs et x est une variable d'entrée.

**4.** Procédé selon la revendication 1, dans lequel les informations d'identification d'utilisateur de groupe sont divisées en $M \cdot k + \Delta k$ sous-groupes ($U_1$, $U_2$, $U_3$, ..., $U_k$), où $0 \leq M$, $0 < \Delta k \leq k$, et à un sous-groupe exprimé par $m \cdot k + i$, où $0 \leq m \leq M$ et (i) $1 \leq i \leq k$ quand $0 \leq m < M$, (ii) $1 \leq i \leq \Delta k$ quand $m = M$, est attribué un polynôme de génération de clé :

$$f_{m \cdot k+i}(x) = a_0 + a_1 \cdot x + a_2 \cdot x^2 + a_3 \cdot x^3 + ... + b_{m,i} \cdot x^i + ... + a_{k-2} \cdot x^{k-2} + a_{k-1} \cdot x^{k-1} + a_k \cdot x^k,$$ où $a_0$ à $a_{i-1}$ et $a_{i+1}$ à $a_k$ sont

des coefficients polynomiaux, $b_{m,i}$ est un coefficient polynomial unique pour le sous-groupe exprimé par $m \cdot k + i$, m et M représentent des entiers non négatifs, i, $\Delta k$ et k représentent des entiers positifs et x est une variable d'entrée.

**5.** Programme informatique générant une clé de déchiffrage dans un système dans lequel un contenu chiffré avec une clé de session (S103) et un bloc d'identification sont délivrés à un ou plusieurs utilisateurs auxquels sont attribuées des informations d'identification d'utilisateur individuelles (S104), le bloc d'identification permettant d'obtenir la clé de session en utilisant une ou plusieurs clés de déchiffrage, et un utilisateur étant autorisé à obtenir la clé de session en utilisant le bloc d'identification et une clé de déchiffrage attribuée à l'utilisateur (S105) et à déchiffrer le contenu chiffré en utilisant la clé de session, exploitable pour :

diviser un groupe d'informations d'identification d'utilisateur d'utilisateurs en sous-groupes ($U_1$, $U_2$, $U_3$, ..., $U_k$) ;
attribuer des polynômes de génération de clé différents aux sous-groupes respectifs ; et
générer une clé de déchiffrage en remplaçant les informations d'identification d'utilisateur dans le polynôme de génération de clé attribué au sous-groupe ($U_1$, $U_2$, $U_3$, ..., $U_k$) auquel appartiennent les informations d'identification d'utilisateur de l'utilisateur.

**6.** Programme informatique selon la revendication 5, dans lequel chaque polynôme de génération de clé comprend des coefficients polynomiaux dont au moins une partie est différente de coefficients polynomiaux de n'importe quel autre polynôme de génération de clé.

**7.** Programme informatique selon la revendication 5, exploitable en outre pour diviser les informations d'identification d'utilisateur de groupe en k sous-groupes ($U_1$, $U_2$, $U_3$, ..., $U_k$) et pour attribuer à un ième sous-groupe ($U_i$), où $1 \leq i \leq k$, un polynôme de génération de clé :

$f_i(x) = a_0 + a_1 \cdot x + a_2 \cdot x^2 + a_3 \cdot x^3 + ... + b_i \cdot x^i + ... + a_{k-2} \cdot x^{k-2} + a_{k-1} \cdot x^{k-1} + a_k \cdot x^k$, où $a_0$ à $a_{i-1}$ et $a_{i+1}$ à $a_k$ sont des coefficients polynomiaux, $b_i$ est un coefficient polynomial unique pour le ième sous-groupe, i et k représentent des entiers positifs et x est une variable d'entrée.

**8.** Programme informatique selon la revendication 5, exploitable en outre pour diviser les informations d'identification d'utilisateur de groupe en $M \cdot k + \Delta k$ sous-groupes ($U_1$, $U_2$, $U_3$, ..., $U_k$), où $0 \leq M$, $0 < \Delta k \leq k$, et pour attribuer à un sous-groupe exprimé par $m \cdot k + i$, où $0 \leq m \leq M$ et (i) $1 \leq i \leq k$ quand $0 \leq m < M$, (ii) $1 \leq i \leq \Delta k$ quand $m = M$, un polynôme de génération de clé :

$f_{m \cdot k+1}(x) = a_0 + a_1 \cdot x + a_2 \cdot x^2 + a_3 \cdot x^3 + ... + b_{m,i} \cdot x^i + ... + a_{k-2} \cdot x^{k-2} + a_{k-1} \cdot x^{k-1} + a_k \cdot x^k$, où $a_0$ à $a_{i-1}$ et $a_{i+1}$ à $a_k$ sont des coefficients polynomiaux, $b_{m,i}$ est un coefficient polynomial unique pour le sous-groupe exprimé par $m \cdot k + i$, m et M représentent des entiers non négatifs, i, $\Delta k$ et k représentent des entiers positifs et x est une variable d'entrée.

**9.** Dispositif de génération de clé de déchiffrage pour l'utilisation dans un système dans lequel un contenu chiffré avec une clé de session (S103) et un bloc d'identification sont délivrés à un ou plusieurs utilisateurs auxquels sont attribuées des informations d'identification d'utilisateur individuelles (S104), le bloc d'identification permettant d'obtenir la clé de session en utilisant une ou plusieurs clés de déchiffrage, et un utilisateur étant autorisé à obtenir la clé de session en utilisant le bloc d'identification et une clé de déchiffrage attribuée à l'utilisateur (S105) et à déchiffrer le contenu chiffré en utilisant la clé de session, comprenant :

des moyens de division agencés pour diviser un groupe d'informations d'identification d'utilisateur d'utilisateurs en sous-groupes ($U_1$, $U_2$, $U_3$, ..., $U_k$) ;
des moyens d'attribution agencés pour attribuer des polynômes de génération de clé différents aux sous-groupes respectifs ; et
des moyens de génération de clé de déchiffrage agencés pour générer une clé de déchiffrage en remplaçant les informations d'identification d'utilisateur dans le polynôme de génération de clé attribué au sous-groupe ($U_1$, $U_2$, $U_3$, ..., $U_k$) auquel appartiennent les informations d'identification d'utilisateur de l'utilisateur.

**10.** Dispositif de génération de clé de déchiffrage selon la revendication 9, dans lequel chaque polynôme de génération de clé comprend des coefficients polynomiaux dont au moins une partie est différente de coefficients polynomiaux de n'importe quel autre polynôme de génération de clé.

**11.** Dispositif de génération de clé de déchiffrage selon la revendication 9, dans lequel les moyens de division sont agencés en outre pour diviser les informations d'identification d'utilisateur de groupe en k sous-groupes ($U_1$, $U_2$, $U_3$, ..., $U_k$) et les moyens d'attribution sont agencés en outre pour attribuer à un ième sous-groupe ($U_i$), où $1 \leq i \leq k$, un polynôme de génération de clé :

$f_i(x) = a_0 + a_1 \cdot x + a_2 \cdot x^2 + a_3 \cdot x^3 + ... + b_i \cdot x^i + ... + a_{k-2} \cdot x^{k-2} + a_{k-1} \cdot x^{k-1} + a_k \cdot x^k$, où $a_0$ à $a_{i-1}$ et $a_{i+1}$ à $a_k$ sont des coefficients polynomiaux, $b_i$ est un coefficient polynomial unique pour le ième sous-groupe, i et k représentent des entiers positifs et x est une variable d'entrée.

**12.** Dispositif de génération de clé de déchiffrage selon la revendication 9, dans lequel les moyens de division sont agencés en outre pour diviser les informations d'identification d'utilisateur de groupe en M.k+Δk sous-groupes ($U_1$, $U_2$, $U_3$, ..., $U_k$), où $0 \leq M$, $0 < \Delta k \leq k$, et les moyens d'attribution sont agencés en outre pour attribuer à un sous-groupe exprimé par m·k+i, où $0 \leq m \leq M$ et (i) $1 \leq i \leq k$ quand $0 \leq m < M$, (ii) $1 \leq i \leq \Delta k$ quand m = M, un polynôme de génération de clé :

$f_{m \cdot k+i}(x) = a_0 + a_1 \cdot x + a_2 \cdot x^2 + a_3 \cdot x^3 + ... + b_{m,i} \cdot x^i + ... + a_{k-2} \cdot x^{k-2} + a_{k-1} \cdot x^{k-1} + a_k \cdot x^k$, où $a_0$ à $a_{i-1}$ et $a_{i+1}$ à $a_k$ sont des coefficients polynomiaux, $b_{m,i}$ est un coefficient polynomial unique pour le sous-groupe exprimé par m·k+i, m et M représentent des entiers non négatifs, i, Δk et k représentent des entiers positifs et x est une variable d'entrée.

```
                    ┌─────────────┐ ⌐1
                    │  Contents   │
                    │providing system│
                    └─────────────┘
                           │
                           │
                    ╱╲╱╲╱╲╱╲╱╲
                   ╱           ╲  ⌐3
                  ╱   Network    ╲
                   ╲            ╱
                    ╲╱╲╱╲╱╲╱╲╱
                   ╱    │    ╲
                  ╱     │     ╲
                 ╱      │      ╲
        ┌─────────┐ ⌐2  ┌─────────┐ ⌐2    ┌─────────┐ ⌐2
        │User system│   │User system│  ... │User system│
        └─────────┘     └─────────┘       └─────────┘
```

# F I G. 1

Contents providing system 1                          User system 2

⌐S101
| Create session key |

⌐S102
| Create header information |

⌐S103
| Cipher contents with session key |

Broadcast or multicast header
information/ciphered contents    ⌐S104

⌐S105
| Acquire session key on the basis of decipher key and header information |

⌐S106
| Decipher ciphered contents with acquired session key |

# F I G. 2

Contents
Ciphering device 10

14 Public key storage unit → 15 Session key creating unit → 11 Contents ciphering unit

12 Header creating unit

13 Information storage unit for users subject to revocation

p, q, k, U

Header | Ciphered contents

Transmit data (header includes share)

## FIG. 3

Received data
Deciphering device 20

Header | Ciphered contents

User information storage unit 23

User ID
Subgroup ID
Decipher key (secret key)

21 Session key deciphering unit

Session key

22 Contents deciphering unit

Contents

## FIG. 4

F I G. 5A

$1, 2, 3, \cdots, 20, \underbrace{21, 22, 23, \cdots, 40}, \cdots, \underbrace{381, 382, 383, \cdots, 400} \cdots$

$\underbrace{\phantom{1, 2, 3, \cdots, 20,}}_{U_1}$ $\underbrace{\phantom{21, 22, 23, \cdots, 40}}_{U_2}$ $\cdots$ $\underbrace{\phantom{381, 382, 383, \cdots, 400}}_{U_{20}}$ $\cdots$

F I G. 5B

$\underline{1}, \underline{2}, \underline{3}, \cdots, 20, 21, 22, 23, \cdots, 40, \cdots, 381, 382, 383, \cdots, 400 \cdots$

$\underbrace{\phantom{1, 2, 3, \cdots, 20}}_{U_1}$ $\underbrace{\phantom{21, 22, 23, \cdots, 40}}_{U_2}$ $\cdots$ $\underbrace{\phantom{381, 382, 383, \cdots, 400}}_{U_{20}}$ $\cdots$

F I G. 5C

$\underline{1}, \underline{2}, \underline{3}, \cdots, \underline{20}, 21, 22, 23, \cdots, 40, \cdots, 381, 382, 383, \cdots, 400 \cdots$

$\underbrace{\phantom{1, 2, 3, \cdots, 20}}_{\underline{U_1}}$ $\underbrace{\phantom{21, 22, 23, \cdots, 40}}_{U_2}$ $\cdots$ $\underbrace{\phantom{381, 382, 383, \cdots, 400}}_{U_{20}}$ $\cdots$

F I G. 5D

$\underline{1}, \underline{2}, \underline{3}, \cdots, \underline{20}, \underline{21}, \underline{22}, \underline{23}, \cdots, 40, \cdots, 381, 382, 383, \cdots, 400 \cdots$

$\underbrace{\phantom{1, 2, 3, \cdots, 20}}_{\underline{U_1}}$ $\underbrace{\phantom{21, 22, 23, \cdots, 40}}_{U_2}$ $\cdots$ $\underbrace{\phantom{381, 382, 383, \cdots, 400}}_{U_{20}}$ $\cdots$

Tracing device 40

| Public key storage unit 43 | → | Header creating unit 41 | → Header → | Tracing object deciphering device 200 |

p, q, k, U

Controller 42

Deciphered result

Tracing result

F I G. 6

START

S1
$R = \phi$ and $z=1$

S2
$T_z = U - \{u_z\}$

S3
$A(U_1, \cdots, U_k, T_z, D)$
$= "1" ?$

NO

YES

S4
$R = R U \{u_z\}$

S6
$Z = Z + 1$

S5
$Z < n ?$

YES

NO

S7
R is issued as a set of pirates

END

# FIG.7

START

S11

B is the set obtained by removing all subsets $U_i$ which satisfy $U_i \subseteq T_z$ from $T_z$

S12

Is B an empty set or not ?

YES

NO

S13

All elements of B are substituted for $x_1, \cdots, x_m$, to calculate $h(r, T_z)$ (formula 4)

S14

Calculate $h(r, T_z)$ (formula 5)

S15

$h(r, T_z)$ is inputted in pirate deciphering unit D to observe its output

S16

Does pirate deciphering unit D output correct session key ?

NO

YES

S18

"1" is outputted

S17

"0" is outputted

END

FIG. 8

START

S21
Lo=0, Hi=n and z=1

S22
Mid= $\lfloor$(Lo+Hi)/2$\rfloor$
$T_z$= {$u_1$, ···, $u_{Mid}$}

S23
A ($U_1$, ···, $U_k$, $T_z$, D)
= "1" ?

NO

YES

S25
Hi=Mid

S24
Lo=Mid

S27
z=z+1

S26
Z< $\lfloor$Log2 n$\rfloor$+1
?

YES

NO

S28
If satisfying A ($U_1$, ···, $U_k$, $T_z$, D)=1,
and A ($U_1$, ···, $U_k$, $T_z$U{u}, D)=0, u is
issued as a pirate ID

END

F I G. 9

START

S11

B is the set obtained by removing all subsets $U_i$ which satisfy $U_i \subseteq T_z$ from $T_z$

S12

Is B an empty set or not ?

YES

NO

S13'

All elements of B are substituted for $x_1, \cdots, x_m$, integer satisfying $d(k+1) \leq w \leq d(k+1)+k$ is found and obtained as $m=d(k+1)+k$, and $h(r, T_z)$ is calculated (formula 10)

S14'

Supposing m=k, w=0, $h(r, T_z)$ is calculated (formula 10)

S15

$h(r, T_z)$ is inputted in pirate deciphering unit D to observe its output

S16

Does pirate deciphering unit D output correct session key ?

NO

YES

S18

"1" is outputted

S17

"0" is outputted

END

FIG.10